# FASCICULE DE BREVET EUROPEEN

(11) **EP 4 336 080 B1**
(45) Date de publication et mention de la délivrance du brevet: **12.03.2025**
(21) Numéro de dépôt: 23195922.2
(22) Date de dépôt: 07.09.2023
(51) Int. Cl.: F16L 33/22, F16L 37/22, F16L 37/42, F16L 37/084, F16L 37/086, F16L 37/138

(54) **ÉLÉMENT FEMELLE DE RACCORD RAPIDE**
SCHNELLKUPPLUNGSBUCHSE
FEMALE QUICK-CONNECT FITTING ELEMENT

(30) Priorité: 08.09.2022 FR 2208994
(43) Date de publication de la demande: 13.03.2024
(73) Titulaire: Staubli Faverges, 74210 Faverges-Seythenex (FR)
(72) Inventeur: MARQUES BARROCA, Serafim, 73460 FRONTENEX (FR); DURIEUX, Christophe, 73200 GILLY SUR ISERE (FR)
(74) Mandataire: Lavoix

(56) Documents cités:
- US-A- 3 188 123
- US-A- 6 062 606
- US-A1- 2007 278 791

## Description

La présente invention concerne un élément femelle de raccord rapide.

Les raccords rapides sont des dispositifs de connexion fluidique comprenant un élément femelle et un élément mâle associé. Chacun des éléments mâle et femelle comprend un passage interne, les passages internes étant en communication fluidique lorsque le raccord est en configuration connectée. L'élément femelle comprend le plus souvent un dispositif de verrouillage, qui s'enclenche lors de la connexion des éléments mâle et femelle, de manière à maintenir le raccord en configuration connectée, d'où le nom de raccord rapide.

On s'intéresse ici aux cas où l'élément mâle est une durite, c'est-à-dire un tuyau souple, dans lequel circule un fluide sous haute pression. De tels dispositifs de verrouillage rapide présentent un danger de désaccouplement intempestif sous pression, ce qui pourrait être source de panne ou d'incident pour l'installation.

Dans certaines applications, le tuyau est connecté à l'élément femelle puis déconnecté de manière répétitive. En outre, les tuyaux sont généralement réalisés en matériau polymère et présentent des épaisseurs légèrement variables.

Il est connu d'utiliser des billes ou bagues qui entrent au contact de la surface extérieure d'un tuyau et pénètrent dans la paroi extérieure du tuyau pour le verrouiller dans l'élément femelle. Ce type de verrouillage concentre des forces de verrouillage sur des surfaces réduites, ce qui a tendance à marquer le tuyau ou à ne pas induire une force d'accrochage suffisant pour retenir le tuyau dans l'élément femelle.

Par exemple, il est connu de DE1525854 d'utiliser un raccord pour tuyau comprenant une canule creuse de raccordement solidaire d'un corps d'un élément femelle de raccord, et une bague extérieure maintenue élastiquement sur l'avant de l'élément femelle. Cette bague comprend une collerette intérieure, qui vient pincer le tuyau directement sur la canule. La bague extérieure est maintenue sur l'avant par un ressort qui plaque le tuyau contre la canule, par l'intermédiaire de la collerette intérieure. L'opérateur doit agir par traction axiale sur la bague pour déverrouiller le raccord. La coopération de la collerette et de la canule a l'inconvénient de marquer le tuyau et le solliciter axialement par friction, en plus de représenter un effort de traction trop important pour l'utilisateur. D'autre part, l'application directe d'une force réduite du ressort, à travers la bague, ne représente pas un moyen fiable de retenue du tuyau à l'établissement de la pression.

US-3 188 123-A décrit, quant à lui, un raccord comprenant des pions 33 de blocage, qui sont repoussés dans une position de retenue par un manchon 43.

C'est à ces problèmes qu'entend plus particulièrement remédier l'invention, en proposant un élément de femelle de raccord rapide qui permette un accouplement sécurisé, y compris sur des tuyaux ayant des épaisseurs légèrement variables.

À cet effet, l'invention concerne un élément femelle de raccord rapide, configuré pour se connecter à un tuyau souple, l'élément femelle comprenant :
- un corps :
   - qui s'étend selon un axe longitudinal et qui définit un volume de réception du tuyau souple, le volume de réception présentant une forme de révolution autour de l'axe longitudinal et débouchant du corps par une embouchure, l'embouchure définissant un côté avant de l'élément femelle,
   - qui comprend une surface de butée, qui est située dans un plan orthogonal à l'axe longitudinal et qui est orientée vers l'avant de l'élément femelle, la surface de butée délimitant le volume de réception du côté arrière de l'élément femelle, le côté arrière étant opposé au côté avant, et
- une canule :
   - qui est solidaire du corps d'élément femelle et qui s'étend dans le volume de réception à partir de la surface de butée,
   - qui comprend un corps creux présentant une forme de révolution autour de l'axe longitudinal, le corps creux délimitant un canal qui débouche, d'une part, du côté avant de l'élément femelle et, d'autre part, dans un passage ménagé dans l'élément femelle du côté arrière, et
   - qui comprend une surface externe.

Selon l'invention, l'élément femelle comprend aussi :
- au moins une ouverture radiale, chaque ouverture radiale étant ménagée dans le corps de l'élément femelle selon un axe de guidage radial à l'axe longitudinal, chaque ouverture radiale débouchant dans le volume de réception, et
- au moins un verrou, chaque verrou étant reçu dans une ouverture radiale respective et étant mobile en translation par rapport au corps suivant l'axe de guidage correspondant entre une première position, dans laquelle ce verrou pénètre dans le volume de réception, et une deuxième position, dans laquelle ce verrou est plus éloigné de l'axe longitudinal que dans la première position, chaque verrou comprenant une surface interne de serrage du tuyau orientée vers l'axe longitudinal en regard de la surface externe de la canule, et
- un organe de rappel, configuré pour rappeler chaque verrou dans sa première position, et
- une bague de manœuvre, qui est disposée autour du corps coaxialement à l'axe longitudinal et qui est mobile en translation par rapport au corps le long de l'axe longitudinal, entre une position de verrouillage et une position de déverrouillage,
alors que :
- chaque verrou comprend des pions, qui s'étendent chacun selon une direction orthogonale à l'axe de guidage correspondant et orthoradiale à l'axe longitudinal,
- la bague de manœuvre comprend des rainures de guidages, qui coopèrent avec les pions de chaque verrou, les rainures de guidage associées à chaque verrou étant géométriquement portées par un plan de guidage incliné par rapport à l'axe longitudinal, de manière que :
   - chaque verrou est entrainé de sa deuxième position vers sa première position lorsque la bague de manœuvre est déplacée de sa position de déverrouillage vers sa position de verrouillage, et
   - chaque verrou est entrainé de sa première position vers sa deuxième position lorsque la bague de manœuvre est déplacée de sa position de verrouillage vers sa position de déverrouillage.

Grâce à l'invention, les mouvements des verrous sont commandés par la bague de manœuvre, viennent en appui contre le tuyau et exercent une force d'appui orthogonale à l'axe longitudinal, réduisant les risques de marquage du tuyau. En cas de connexions et de déconnexions répétées, les risques de fuites et/ou de rupture du tuyau sont réduits. En outre, le déplacement des verrous permet de rattraper les jeux dimensionnels, en particulier les variations d'épaisseurs des tuyaux. La force d'appui, qui est exercée par l'organe de rappel et transmise par les verrous, dépend peu des variations d'épaisseurs des tuyaux, l'accouplement est ainsi sécurisé. Enfin l'emploi de rainures de guidage inclinées permet par démultiplication des efforts, d'appliquer un effort de verrouillage important sur le tuyau sans dégrader la facilité de déconnexion du raccord par la manœuvre de la bague de verrouillage.

Selon des aspects avantageux mais non obligatoires de l'invention, un tel élément femelle peut incorporer une ou plusieurs des caractéristiques suivantes prises isolément ou selon toute combinaison techniquement admissible :
- L'organe de rappel est configuré pour rappeler la bague de manœuvre vers sa position de verrouillage, et en ce que la bague de manœuvre entraine chaque verrou vers sa première position lorsque l'organe de rappel rappelle la bague de manœuvre vers sa position de verrouillage.
- Les rainures de guidage s'éloignent de l'axe longitudinal à mesure qu'elles se rapprochent de l'avant de l'élément femelle, la position de déverrouillage de la bague de manoeuvre étant une position axialement reculée, le long de l'axe longitudinal, par rapport à la position de verrouillage.
- L'organe de rappel applique à chaque verrou un effort centripète, qui tend à déplacer chaque verrou de sa deuxième position à sa première position.
- La canule présente un renflement circonférentiel qui est aligné radialement avec la surface interne de serrage de chaque verrou par rapport à l'axe longitudinal.
- La surface interne de serrage de chaque verrou s'étend géométriquement du côté arrière d'un premier plan de serrage, qui est orthogonal à l'axe longitudinal, alors que la canule comprend un renflement circonférentiel, qui est ménagé sur la surface externe de la canule et qui est situé à l'avant du premier plan de serrage de chaque verrou.
- Le renflement circonférentiel comprend :
   - une portion proximale évasée, qui est divergente vers l'avant de l'élément femelle et qui est agencée en regard de chaque verrou, et
   - une portion distale évasée divergente vers l'arrière de l'élément femelle.
- La portion proximale du renflement est délimitée, vers l'arrière, par un deuxième plan de serrage, qui est parallèle au premier plan de serrage, alors que le premier plan de serrage et le deuxième plan de serrage sont séparés d'un intervalle inférieur à 5 mm, préférablement inférieur à 2 mm.
- La surface externe de la canule comprend une portion de serrage, qui est située à l'arrière de la portion proximale du renflement circonférentiel et qui s'étend en regard de la surface interne de serrage de chaque verrou, alors que la portion de serrage et la surface interne délimitent entre eux un espace annulaire de serrage, et que la portion de serrage présente une forme de cylindre de section circulaire.
- L'élément femelle comprend :
   - une soupape, qui est en partie reçue dans le passage et qui est mobile par rapport au corps entre une position avancée, dans laquelle la soupape obture le passage, et une position reculée, dans laquelle la soupape n'obture pas le passage,
   - un deuxième organe de rappel, qui rappelle la soupape vers sa position avancée,
   tandis que la soupape est configurée pour passer de la position avancée vers la position reculée lorsqu'un tuyau est emmanché sur la canule et vient en butée contre la surface de butée.
- Le corps présente un logement, qui débouche sur la surface de butée, alors que l'élément femelle comprend un organe de commande, qui est reçu dans le logement et qui est mobile en translation par rapport au corps parallèlement à l'axe longitudinal, entre une position émergée, dans laquelle une portion avant de l'organe de commande émerge de la surface de butée, et une position retirée, dans laquelle la portion avant n'émerge pas de la surface de butée, et que l'organe de commande est configuré pour repousser la soupape de la position avancée vers la position reculée lorsque le tuyau est emmanché sur la canule et déplace la portion avant de l'organe de commande de sa position émergée vers sa position retirée.
- Le corps comprend une première lumière de visualisation,
   - qui s'étend au travers du corps selon un axe de visée radial à l'axe longitudinal,
   - qui est ménagée à l'avant de la surface de butée, la première lumière débouchant dans le volume de réception,
   tandis que la première lumière est agencée de manière à permettre l'observation, au travers de la première lumière, de l'organe de commande en position émergée.
- La bague de manœuvre comprend une deuxième lumière de visualisation, qui s'étend au travers de la bague de manœuvre selon un axe de passage parallèle à l'axe de visée, alors que la deuxième lumière est agencée pour coïncider avec la première lumière, lorsque la bague de manœuvre est dans la position de déverrouillage, de manière à permettre l'observation au travers de la première lumière, de l'organe de commande en position émergée.
- La bague de manœuvre comprend une portion transparente, la portion transparente couvrant la première lumière et la deuxième lumière lorsque la bague de manœuvre est dans la position de déverrouillage.
- L'élément femelle comprend un levier, qui est monté mobile en rotation par rapport au corps autour d'un axe de pivot entre une position relevée et une position abaissée, l'axe de pivot étant orthoradial à l'axe longitudinal, alors que le levier comprend une portion de guidage, qui coopère avec la bague de manœuvre de manière à conduire la bague de manœuvre de la position de verrouillage à la position de déverrouillage, lorsque le levier est entraîné autour de son axe de pivot entre sa position relevée et sa position abaissée.

L'invention sera mieux comprise, et d'autres avantages de celle-ci apparaîtront plus clairement à la lumière de la description qui va suivre, de plusieurs modes de réalisation d'un élément femelle de raccord rapide, conformes à son principe, donnée uniquement à titre d'exemple et faite en référence aux dessins annexés, dans lesquels :
- [Fig 1] la figure 1 est une coupe longitudinale d'un raccord rapide, conforme à un premier mode de réalisation de l'invention, comprenant un élément femelle et un élément mâle associé, représentés dans une première configuration dite désaccouplée ;
- [Fig 2] la figure 2 représente, sur deux inserts a) et b), un verrou appartenant à l'élément femelle de la figure 1, représenté respectivement en perspective et en perspective éclatée ;

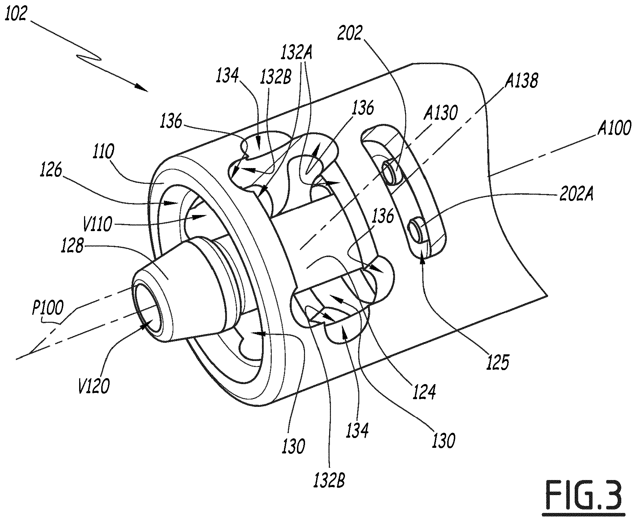

- [Fig 3] la figure 3 est une vue partielle et en perspective d'un corps de l'élément femelle de la figure 1, observé selon une flèche III à la figure 1 ;
- [Fig 4] la figure 4 est une vue en perspective d'une bague de manoeuvre de l'élément femelle de la figure 1, observé selon une flèche IV à la figure 1 ;
- [Fig 5] la figure 5 est une vue de côté de l'élément femelle de la figure 1, certaines pièces étant cachées ;
- [Fig 6] la figure 6 représente, sur deux inserts a) et b), le raccord rapide de la figure 1 dans une deuxième configuration, le raccord rapide étant représenté respectivement en coupe longitudinale et en vue de côté, certaines pièces étant cachées ;
- [Fig 7] la figure 7 représente, sur deux inserts a) et b), le raccord rapide de la figure 1 dans une troisième configuration, le raccord rapide étant représenté respectivement en coupe longitudinale et en vue de côté, certaines pièces étant cachées ;
- [Fig 8] la figure 8 représente, sur deux inserts a) et b), le raccord rapide de la figure 1 dans une quatrième configuration dite accouplée, le raccord rapide étant représenté respectivement en coupe longitudinale et en vue de côté, certaines pièces étant cachées ;
- [Fig 9] la figure 9 représente respectivement, sur deux inserts a) et b), une coupe longitudinale de raccords rapides conformes à un deuxième mode et un troisième mode de réalisation de l'invention, les raccords rapides étant représentés dans une configuration accouplée analogue à celle de la figure 8 pour le premier mode de réalisation ;
- [Fig 10] la figure 10 représente respectivement, sur trois inserts a), b) et c), un verrou d'un raccord rapide conforme à un quatrième mode de réalisation de l'invention, représenté respectivement en perspective et en perspective éclatée, et une vue de côté de l'élément femelle du raccord rapide du quatrième mode de réalisation, certaines pièces étant cachées, et
- [Fig 11] la figure 11 représente respectivement, sur trois inserts a), b) et c), un levier appartenant à un raccord rapide conforme à un cinquième mode de réalisation de l'invention, en perspective, en vue de côté dans une configuration désaccouplée analogue à celle de la figure 1 pour le premier mode de réalisation et en vue de côté dans une deuxième configuration analogue à celle de la figure 6 pour le premier mode de réalisation.

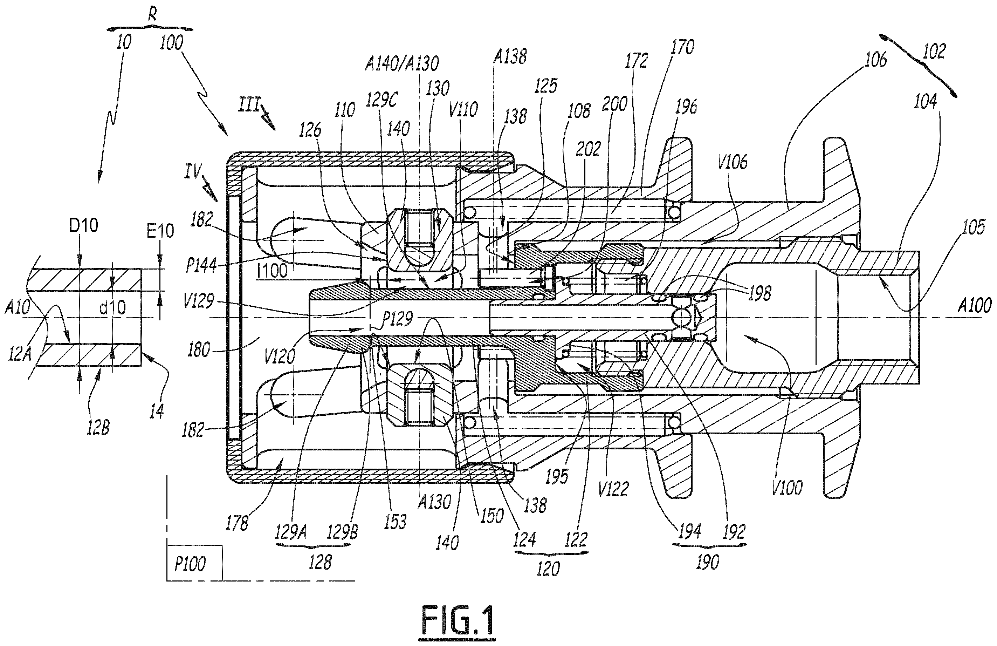

La figure 1 représente un raccord R, qui comprend un élément mâle, ici un tuyau 10, sur la gauche de la figure 1, et un élément femelle 100 associé, sur la droite de la figure 1. Le raccord R est ici représenté dans une configuration désaccouplée, dans laquelle le tuyau 10 et l'élément femelle 100 sont séparés l'un de l'autre.

Le tuyau 10 est un tuyau souple, aussi dit « durite ». Seule une portion d'extrémité du tuyau 10 est représentée sur les figures, cette portion d'extrémité étant considérée comme rectiligne. Le tuyau 10 est ici centré sur un axe de tuyau A10. Le tuyau 10 comprend une surface interne 12A, de forme cylindrique à section circulaire et caractérisée par un diamètre interne d10, une surface externe 12B, également de forme cylindrique à section circulaire et caractérisée un diamètre externe D10. Le tuyau 10 présente aussi une face avant 14, qui relie la surface interne 12A et la surface externe 12B et qui est orientée vers l'élément femelle 100 lors de la connexion de l'élément femelle 100 au tuyau 10. Le tuyau 10 présente une épaisseur E10 mesurée radialement à l'axe A10, entre la surface externe 12B et la surface interne 12A. Le tuyau 10 est réalisé en un matériau polymère élastiquement déformable. Le tuyau 10 est par exemple fabriqué par extrusion. À cause des dispersions de fabrication et/ou des déformations du tuyau 10 au cours de son utilisation, les dimensions du tuyau 10, à savoir le diamètre intérieur d10, le diamètre extérieur D10 et l'épaisseur E10, présentent des variations, par exemple de ±10%.

On décrit à présent l'élément femelle 100 du raccord rapide R.

L'élément femelle 100 comprend un corps 102, qui présente une forme globalement de révolution autour d'un axe longitudinal A100. Dans la configuration de la figure 1, l'axe longitudinal A100 est aligné avec l'axe de tuyau A10 et ces axes alignés définissent ensemble un axe d'emmanchement du raccord R.

Le corps 102 est ici réalisé en deux parties et comprend une partie proximale 104, dans laquelle est ménagé un trou taraudé 105 prévu pour y fixer une conduite de fluide, et une partie distale 106, qui est ici assemblée à la partie proximale 104 par vissage. La conduite de fluide n'est pas représentée. Le trou taraudé 105 définit un côté arrière du corps 102 et, par extension, un côté arrière de l'élément femelle 100. Un côté avant est un côté opposé au côté arrière. Le corps 102 de l'élément femelle 100 est creux et délimite un passage fluidique V100. Le passage fluidique V100 débouche ici, du côté arrière, par le trou taraudé 105.

De manière générale, on précise que pour un premier axe donné, un axe radial à ce premier un axe est un axe orthogonal à ce premier axe. Un plan transversal à ce premier axe est un plan orthogonal à ce premier axe. Un axe orthoradial à ce premier axe est un axe qui est porté par un plan transversal à ce premier axe et qui n'est pas sécant à ce premier axe.

L'élément femelle 100 comprend également une canule 120. La canule 120 est solidaire du corps 102. Dans l'exemple illustré, la canule 120 est assemblée par vissage à la partie proximale 104. La canule 120 comprend une embase 122, par l'intermédiaire de laquelle la canule 120 est assemblée à la partie proximale 104, et une portion avant 124, qui présente une forme allongée et qui s'étend parallèlement à l'axe longitudinal A100 et qui est configurée pour être emmanchée dans le tuyau 10.

L'embase 122 ménage une surface de butée 125, qui est orientée vers l'avant et à partir de laquelle s'étend la portion avant 124. La surface de butée 125 est située dans un plan transversal à l'axe longitudinal A100. Lorsque le tuyau 10 est emmanché sur la portion avant 124, la surface de butée 125 limite l'amplitude du mouvement du tuyau 10 vers l'arrière de l'élément femelle 100, parallèlement à l'axe longitudinal A100.

La partie distale 106 ménage ici un volume de montage V106, qui loge un sous-ensemble comprenant la canule 120 et la partie proximale 104. Dans l'exemple illustré, la partie distale 106 comprend un épaulement 108, qui est ménagé dans volume de montage V106 et qui est orienté vers l'arrière, la surface de butée 125 étant en appui contre l'épaulement 108. L'épaulement 108 est donc aligné, le long de l'axe longitudinal A100, avec la surface de butée 125.

Du côté avant de la surface de butée 125, la partie distale 106 comprend une avancée 110, qui présente une forme de révolution autour de l'axe longitudinal A100, qui s'étend vers l'avant à distance de la canule 120 et qui ménage un volume de réception V110 du tuyau 10. Le volume de réception V110 est configuré pour recevoir le tuyau 10 lorsque le tuyau 10 est emmanché sur la canule 120. Le volume de réception V110 présente une forme de révolution autour de l'axe longitudinal A100, est délimité du côté arrière par la surface de butée 125 et débouche du corps 102, vers l'avant, par une embouchure 126. L'embouchure 126 est de préférence circulaire et présente un diamètre supérieur au diamètre externe D10 du tuyau 10.

La canule 120 présente une forme de révolution autour de l'axe longitudinal A100 et ménage un canal V120. Le canal V120 est donc centré sur l'axe longitudinal A100. La canule 120 est reliée fluidiquement à la partie proximale 104. Le canal V120 débouche, d'une part, du côté avant de l'élément femelle 100 et, d'autre part, dans le passage V100.

La canule 120 comprend une surface externe qui s'étend dans le volume de réception V110. La surface externe de la canule 120 est configurée pour emmancher le tuyau 10. La surface interne 12A du tuyau 10 est reçue sur la surface externe de canule lorsque le tuyau 10 est emmanché sur la canule 120. La surface externe de canule est configurée pour recevoir la surface interne 12A du tuyau en ce que l'extrémité de la portion avant 124 de la canule 120 présente un diamètre proche ou inférieur au diamètre interne d10 du tuyau 10.

Un renflement circonférentiel 128 est avantageusement ménagé en saillie sur la portion avant 124 de la canule 120. Le renflement circonférentiel 128 est configuré pour coopérer avec la surface interne 12A du tuyau 10, de manière à améliorer l'étanchéité entre le tuyau 10 et la canule 120 et à retenir la surface interne 12A du tuyau emmanché sur la canule 120. Dans le premier mode de réalisation, le renflement circonférentiel 128 est agencé à une extrémité avant de la portion avant 124 de la canule 120. Le renflement circonférentiel 128 comprend, successivement en partant de l'embouchure de la canule 120 et en se déplaçant vers l'arrière, une portion distale 129A, qui est divergente vers l'arrière de l'élément femelle 100 et qui est configurée pour faciliter l'emmanchement de la canule 120 dans le tuyau 10, et une portion proximale 129B, qui est divergente vers l'avant de l'élément femelle 100. Du coté arrière, la portion proximale 129B est délimité par un premier plan de serrage P129, qui est un plan transversal à l'axe longitudinal A100.

Lorsque le tuyau 10 est emmanché sur la canule 120, le tuyau 10 se déforme élastiquement et accommode le passage du renflement circonférentiel 128. On considère que la surface interne 12A du tuyau 10 épouse la surface externe de la canule 10, en particulier épouse le profil du renflement 128 par déformation élastique de manière à réaliser une section d'étanchéité entre le tuyau 10 et la canule 120.

Le corps 102 comprend aussi au moins une ouverture radiale 130. Dans l'exemple illustré, le corps 102 comprend deux ouvertures radiales 130, qui sont ménagées au travers de l'avancée 110. Chaque ouverture radiale 130 est ménagée dans le corps 102 selon un axe de guidage A130 respectif. Chaque axe de guidage A130 est radial à l'axe longitudinal A100. Chaque ouverture radiale 130 débouche dans le volume de réception V110. Les deux ouvertures radiales 130 sont ici diamétralement opposées l'une à l'autre par rapport à l'axe longitudinal A100, ce qui fait que les deux axes de guidage A130 sont alignés. Les axes de guidage A130 sont situés dans un plan longitudinal P100 de l'élément femelle 100, le plan longitudinal P100 étant le plan de coupe de la figure 1.

Dans l'exemple illustré, chaque ouverture radiale 130 présente, dans un plan orthogonal à l'axe de guidage A130 correspondant, une section globalement rectangulaire.

Chaque ouverture radiale 130 comprend ainsi deux parois transversales 132A, qui s'étendent en regard l'une de l'autre orthogonalement à l'axe longitudinal A100, et deux parois latérales 132B, qui s'étendent en regard l'une de l'autre parallèlement à l'axe longitudinal A100. Les parois transversales 132A et les parois latérales 132B sont parallèles à l'axe de guidage A130 correspondant. Autrement dit, chaque ouverture radiale 130 présente des parois 132A et 132B qui sont parallèles à l'axe de guidage A130 correspondant.

Avantageusement, des dégagements 134 sont prévus perpendiculairement aux deux parois latérales 132B. Les dégagements 134 ont ici réalisés par fraisage et présentent chacun une forme semi-cylindriques, les dégagement 134 étant centrés sur un axe orthoradial à l'axe longitudinal A100.

Optionnellement, des congés 136 sont ménagés à chacune des jonctions entre les parois latérales 132B et les dégagements 134. Les congés 136 sont ici des usinages arrondis, ménagés par des perçages parallèles à l'axe de guidage A130 correspondant.

Chaque ouverture radiale 130 reçoit un verrou 140, chaque verrou 140 étant mobile en translation par rapport au corps 102 de l'élément femelle 100 suivant une direction parallèle à l'axe de guidage A130 de l'ouverture radiale 130 dans laquelle ce verrou 140 est reçu.

Avantageusement, le corps 102 comprend une première lumière 138 de visualisation, qui s'étend au travers du corps 102 selon un axe de visée A138 radial à l'axe longitudinal A100. La première lumière 138 présente ici une forme cylindrique de section sensiblement rectangulaire, la première lumière 138 étant agencée dans sa longueur transversalement à l'axe longitudinal A100. La première lumière 138 est ménagée à l'avant de la surface de butée 125. La première lumière 138 débouche dans le volume de réception V110. La première lumière 138 débouche à l'extérieur du corps 102. La première lumière 138 est agencée de manière à permettre l'observation, au travers de la première lumière 138, d'une partie de la surface de butée 125.

Dans l'exemple illustré, le corps 102 comprend deux premières lumières 138, qui sont ménagées entre chacune des ouvertures radiales 130 et la surface de butée 125, les axes de visées A138 étant parallèles aux axes de guidage A130.

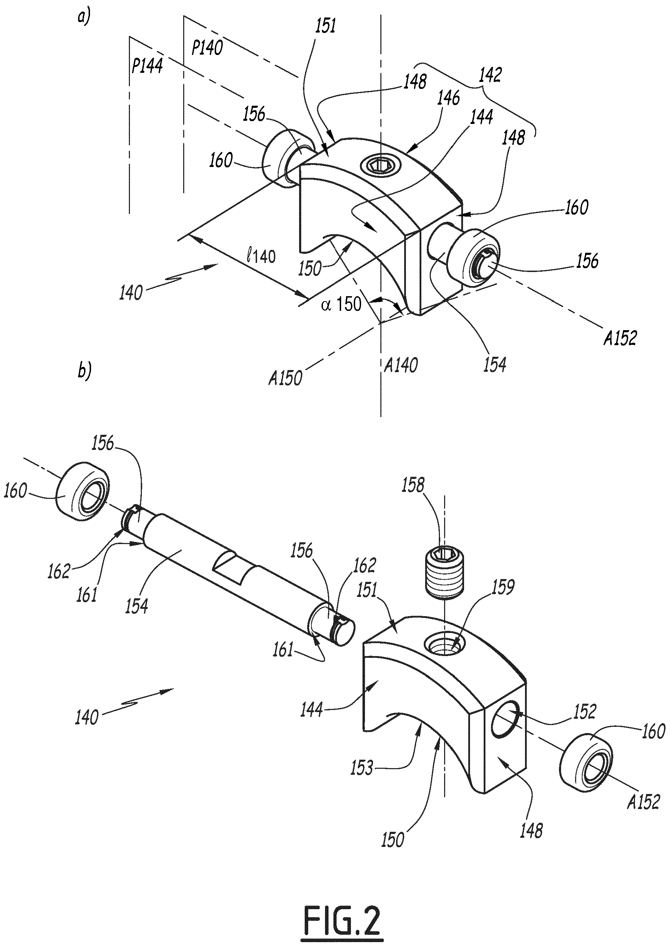

Un verrou 140 est représenté isolé sur la figure 2.

On décrit à présent les verrous 140 en référence notamment à la figure 2. Les deux verrous 140 de l'élément femelle 102 sont de préférence identiques l'un à l'autre.

Chaque verrou 140 présente une surface périphérique 142 centrée sur un axe de verrou A140. Lorsqu'un verrou 140 est reçu dans une des ouvertures radiales 130, l'axe de verrou A140 de ce verrou est confondu avec l'axe radial A130 de l'ouverture radiale 130 correspondante. La surface périphérique 142 est configurée pour coopérer avec les parois transversales 132A et latérales 132B de l'ouverture radiale 130, notamment par complémentarité de formes, de manière à guider le verrou 140, reçu dans l'ouverture radiale 130 correspondante, en translation selon les axes A130 et A140 confondus.

Dans l'exemple, la surface périphérique 142 présente, en section dans un plan orthogonal à l'axe de verrou A140, un profil rectangulaire. La surface périphérique 142 comprend une face distale 144, qui est orientée vers l'embouchure 126 lorsque le verrou 140 est reçu dans l'ouverture radiale 130 correspondante, une face proximale 146, qui est orientée à l'opposé de la face distale 144 et donc orientée du côté opposé de l'embouchure 126, la face distale 144 et la face proximale 146 étant reliées l'une à l'autre par deux faces latérales 148. Les faces distale 144, proximale 146 et latérales 148 sont préférentiellement planes. La face distale 144 est géométriquement portée par un deuxième plan de serrage P144, qui est un plan transversal à l'axe longitudinal A100 lorsque l'élément femelle 100 est assemblé.

En configuration montée du verrou 140 dans une ouverture radiale 130, ses faces distale 144 et proximale 146 sont en contact glissant avec les parois transversales 132A de cette ouverture, alors que ses faces latérales 148 sont en contact glissant avec les parois latérales 132B de cette ouverture.

Chaque verrou 140 comprend aussi une surface interne 150, qui est ici une surface globalement concave traversée par l'axe de verrou A140 correspondant. La surface interne 150 est orientée vers l'axe longitudinal A100 en regard de la surface externe de la canule 120 lorsque le verrou 140 est reçu dans l'ouverture radiale 130 associée. Chaque verrou 140 comprend aussi une face externe 151, qui est orientée à l'opposé de la face interne 150 selon l'axe de verrou A140.

Comme expliqué ci-dessous, chaque surface interne 150 est configurée pour venir en appui sur la surface externe 12B du tuyau 10 lorsque le tuyau 10 est emmanché sur la canule 120, de manière à serrer le tuyau 10 et empêcher son glissement sur la canule 120. Chaque surface interne 150 est donc une surface de serrage du verrou 140 correspondant.

Par commodité, on définit un plan médian P140 du verrou 140 comme étant un plan parallèle à la face distale 144 et contenant l'axe de verrou A140. Le plan médian P140 est ici un plan de symétrie du verrou 140. Dans l'exemple illustré, chaque surface interne 150 est une portion de cylindre de section circulaire et centré sur un axe A150 orthogonal au plan médian P140. La surface interne 150 présente un diamètre sensiblement égal au diamètre de l'embouchure 126.

La surface interne 150 présente, en projection sur le plan médian P140, un profil en arc de cercle centré sur l'axe A150. On définit un angle de serrage α150 comme étant l'angle de cet arc de cercle mesuré autour l'axe A150 sur lequel est centré cet arc de cercle. L'angle de serrage α150 est le plus grand possible, de manière à augmenter une surface de contact entre chaque verrou 140 et le tuyau 10. Ainsi, l'angle de serrage α150 est supérieur ou égal à 90°, de préférence supérieur ou égal à 120°, de préférence encore supérieur ou égal à 160°. Dans l'exemple illustré, l'angle de serrage α150 est égal à 160°.

Sur la figure 1, les verrous 140 sont représentés en coupe. Pour chaque verrou 140, La face interne 150 est reliée aux faces distale 144 et proximale 146 correspondantes par deux arêtes arrondies 153 respectives, de manière à réduire les risques de marquage du tuyau 10 lorsque celui-ci est maintenu par les verrous 140, comme expliqué plus loin.

Un alésage traversant 152 est ménagé au travers de chaque verrou 140, l'alésage 152 débouchant sur chacune des faces latérales 148 du verrou. L'alésage 152 est centré sur un axe A152, qui est parallèle au plan médian P140 et orthogonal à l'axe de verrou A140. Autrement dit, en configuration assemblée de l'élément femelle 100, l'axe A152 de l'alésage 152 est orthoradial à l'axe longitudinal A100.

Chaque verrou 140 comprend une tige 154, qui est reçue dans l'alésage 152 correspondant et qui dépasse de chacune des faces latérales 148, de manière à former deux pions de guidage 156. La tige 154 est ici maintenue dans l'alésage 152 au moyen d'une vis de pression 158 insérée dans un taraudage 159 qui débouche sur la face externe 151. Lorsque l'élément femelle 100 est assemblé, les pions 156 de chaque verrou 150 s'étendent ainsi suivant la direction de l'axe A152 de l'alésage 152, autrement dit suivant une direction orthogonale à l'axe radial A130 de l'ouverture radiale 130 correspondante.

On définit une largeur ℓ140 de chaque verrou 140 comme étant une distance entre les deux faces latérales 148 de ce verrou 140. Autrement dit, la largeur ℓ140 est sensiblement égale, aux jeux d'assemblage près, à une distance entre les deux surfaces latérales 132B d'une ouverture radiale 130. La largeur ℓ140 est supérieure à 50% du diamètre de l'embouchure 126 - autrement dit supérieure à un rayon de l'embouchure 126 -, de préférence supérieure à 75% du diamètre de l'embouchure 126, de préférence encore supérieure au diamètre de l'embouchure 126. On assure ainsi une surface de contact entre chaque verrou 140 et le tuyau 10 la plus étendue possible.

Dans le premier mode de réalisation, chaque verrou 140 comprend avantageusement des galets 160, qui sont chacun assemblés à un pion 156 respectif. Les galets 160 sont avantageusement montés mobiles en rotation par rapport à la tige 154 autour de l'axe A152. Dans l'exemple, les mouvements axiaux de chaque galet 160 sont limités, d'une part, par un épaulement 161 ménagé sur la tige 154 et, d'autre part, par un jonc élastique logé dans une rainure 162 ménagée en extrémité de la tige 154. Les joncs ne sont pas représentés. Avantageusement les galets sont dans un matériau réduisant les frottements lors d'un contact métal sur métal. Les galets 160 sont de préférence réalisés en un alliage cuivreux, de préférence du bronze. Les galets 160 servent à améliorer le fonctionnement de l'élément femelle 100, comme expliqué plus loin.

Chaque verrou 140 est reçu dans une ouverture radiale 130 respective et est mobile en translation par rapport au corps 102 de l'élément femelle 100 suivant l'axe radial A130 correspondant, entre une première position, dans laquelle ce verrou 140 pénètre dans le volume de réception V100, et une deuxième position, dans laquelle ce verrou 140 ne pénètre pas dans le volume de réception V100.

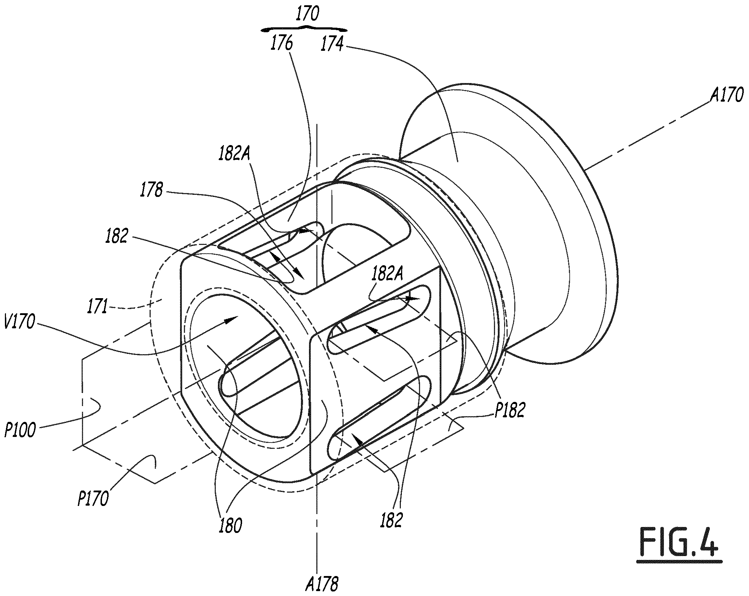

Les mouvements de chacun des verrous 140 sont commandés par une bague de manœuvre 170, qui appartient à l'élément femelle 100. La bague de manœuvre 170 est représenté isolément à la figure 4. L'élément femelle 100 comprend avantageusement une portion transparente, ici un capot 171, qui présente une forme globalement cylindrique et qui est assemblé à la bague de manœuvre 170, par exemple clipsé à la bague de manœuvre 170 ou encore surmoulé sur la bague de manœuvre 170. Le capot 171, qui est avantageusement réalisé en un matériau transparent, est représenté en pointillés sur la figure 4. Le capot 171 sert notamment à éviter l'intrusion de corps étrangers dans l'élément femelle 100, tout en autorisant une inspection visuelle de l'élément femelle 100.

Le capot 171 est facultatif, car il n'est pas indispensable au fonctionnement de l'élément femelle 100, mais contribue à la sécurité d'utilisation de l'élément femelle 100.

La bague de manœuvre 170 présente une forme globalement de révolution autour d'un axe de bague A170 et ménage une cavité V170, configurée pour recevoir le corps 102. En configuration assemblée de l'élément femelle 100, la bague de manœuvre 170 est disposée autour du corps 102 coaxialement à l'axe longitudinal A100, c'est-à-dire que l'axe de bague A170 est confondu avec l'axe longitudinal A100. Le plan longitudinal P100 de l'élément femelle 100 est aussi un plan longitudinal pour la bague de manœuvre 170. La bague de manœuvre 170 présente ici une forme symétrique à la fois par rapport au plan longitudinal P100 et par rapport à un deuxième plan P170, le deuxième plan P170 étant parallèle à l'axe de bague A170 et orthogonal au plan longitudinal P100.

La cavité V170 débouche ainsi à la fois d'un côté avant de la bague de manœuvre 170 et d'un côté arrière de la bague de manœuvre 170, les côtés avant et arrière de la bague de manœuvre 170 étant identiques aux coté avant et arrière de l'élément femelle 100 lorsque l'élément femelle 100 est assemblé.

La bague de manœuvre 170 est mobile en translation par rapport au corps 102 de l'élément femelle 100 le long de l'axe longitudinal A100, entre une position avant et une position arrière. Ici, la bague de manœuvre 170 est ramenée par défaut vers l'avant de l'élément femelle 100 par un premier organe de rappel, ici un ressort de compression 172, qui agit entre deux faces opposées de la bague de manœuvre 170 et du corps 102.

La bague de manœuvre 170 comprend ici une portion arrière 174, qui coulisse autour du corps 102 et qui loge le ressort 172, et une portion avant 176, dans laquelle est ménagé un passage radial 178. Le passage radial 178 traverse de part en part la portion avant 176 parallèlement à un axe de passage A178, qui est un axe radial à l'axe de bague A170 et parallèle au plan longitudinal P100. L'axe de passage A178 est donc parallèle aux axes de guidage A130 lorsque l'élément femelle 100 est assemblé. Le passage radial 178 présente ici une forme de cylindre de profil sensiblement rectangulaire et centré sur l'axe de passage A178.

Le passage radial 178 est configuré pour recevoir les verrous 140, sans interférer avec les mouvements des verrous lorsque la bague de manoeuvre 170 est déplacée entre sa position avant et sa position arrière, et que les verrous 140 sont déplacés entre leur première position et leur deuxième position respectives.

Le passage radial 178 ménage deux parois planes 180 qui sont agencées en regard l'une de l'autre de part et d'autre du plan longitudinal P100. Chaque paroi plane 180 comprend deux rainures de guidage 182, qui sont chacune associées à un verrou 140 respectif.

Les rainures de guidage 182 sont ici des trous oblongs, qui s'étendent chacun parallèlement au plan longitudinal P100 et qui débouchent dans le passage radial 178.

Pour chaque verrou 140, la bague de manœuvre 170 comprend ainsi deux rainures de guidage 182, ces deux rainures 182 étant parallèles entre elles et situées de part et d'autre du plan longitudinal P100.

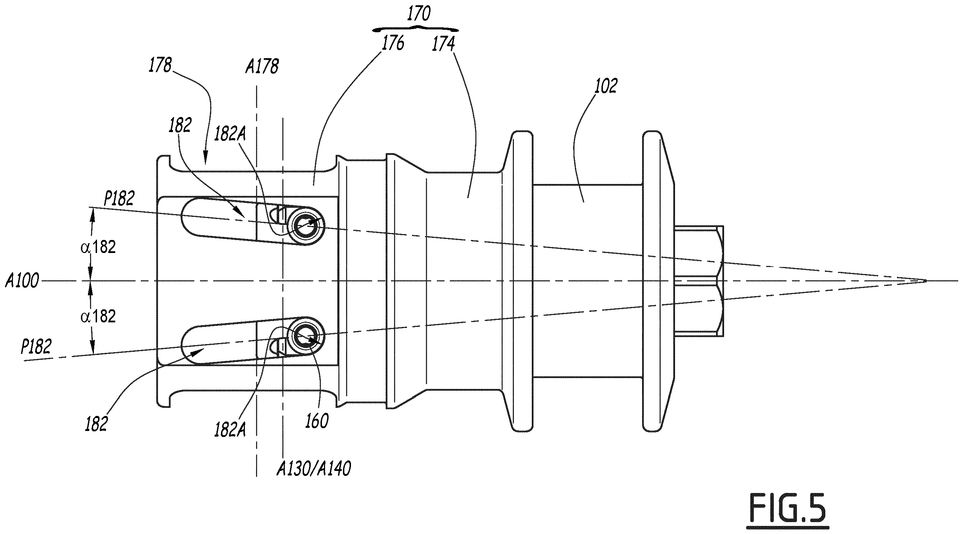

Les rainures de guidage 182 associées à un même verrou 140 sont géométriquement portées par un plan de guidage P182. Le plan de guidage P182 et l'axe de bague A170 - et par extension l'axe longitudinal A100 - forment entre eux un angle d'inclinaison α182, qui est, par convention, considéré comme étant égal à 90° - degrés - lorsque le plan de guidage P182 est orthogonal à l'axe longitudinal A100, et comme étant égal à 0° lorsque le plan de guidage P182 est parallèle à l'axe longitudinal A100. L'angle d'inclinaison α182 est représenté à la figure 5.

Chaque plan de guidage P182 est incliné par rapport à l'axe longitudinal A100. Par incliné, on entend que le plan de guidage P182 n'est ni parallèle, ni orthogonal à l'axe longitudinal A100. Autrement dit, l'angle d'inclinaison α182 n'est ni nul ni égal à 90°.

Ici, chaque plan de guidage P182 est incliné vers l'arrière, c'est-à-dire que les rainures de guidage 182 se rapprochent de l'axe longitudinal A100 à mesure qu'elles se rapprochent de l'arrière de l'élément femelle 100, lorsque l'élément femelle 100 est assemblé.

Lorsque l'élément femelle 100 est assemblé, chaque verrou 140 est reçu dans une ouverture radiale 130 respective et dans le passage radial 178 respectif et est guidé en translation selon l'axe de guidage A130. Les pions 156, ici équipés des galets 160, sont reçus dans les rainures de guidage 182 qui sont inclinées. Ainsi, lorsque la bague de manœuvre 170 est déplacée vers l'avant de l'élément femelle 100, chaque verrou 140 est rapproché de l'axe longitudinal A100, jusqu'à ce que les galets 160 arrivent en butée contre un fond 182A de la rainure de guidage 182 correspondante. Ici, la position avant de la bague de manœuvre 170 est donc une position de verrouillage de la bague de manœuvre 170, le ressort de compression 172 étant agencé pour repousser la bague de manœuvre 170 vers sa position de verrouillage. La position axiale des galets 160 le long de l'axe A100 détermine la butée de la bague de manœuvre 170 vers l'avant. En variante, un moyen de butée alternatif pourrait être prévu pour arrêter en translation la bague de manœuvre sur l'avant à l'encontre de l'effort de ressort 172.

À l'inverse, lorsque la bague de manœuvre 170 est déplacée vers l'arrière de l'élément femelle 100, chaque verrou 140 est éloigné de l'axe longitudinal A100 par les galets 160 qui coulissent dans les rainures de guidage 182. Ici, la position arrière de la bague de manœuvre 170 est donc une position de déverrouillage de la bague de manœuvre 170.

On comprend que la transmission des efforts entre la bague de manœuvre 170 et les verrous 140 dépend de l'angle d'inclinaison α182. L'angle d'inclinaison α182 et les caractéristiques mécaniques du ressort 172, notamment une raideur et une longueur du ressort 172, sont choisies pour satisfaire le maintien du tuyau 10 tout en autorisant une manœuvre manuelle de verrouillage/déverrouillage de l'élément femelle 100. Chaque plan de guidage P182 est incliné par rapport à l'axe longitudinal A100 d'un angle d'inclinaison α182 compris entre 2° et 30°, de préférence compris entre 5° et 10°, de préférence encore égal à 5°. Dans l'exemple illustré, l'angle d'inclinaison α182 est égal à 5°.

Dans le premier mode de réalisation, la portion distale 129A présente une forme tronconique, tandis que la portion proximale 129B, qui relie la portion distale 129A au reste la portion avant 124, est orienté vers les verrous 140, de manière à pincer le tuyau 10 entre la portion proximale 129B et les verrous 140 lorsque le tuyau 10 est emmanché sur la canule 120 et les verrous 140 maintenus en première position. Le premier plan de serrage P129 est situé à l'avant du deuxième plan de serrage P144. Le premier plan de serrage P129 et le deuxième plan de serrage P144 sont avantageusement, rapprochés l'un de l'autre, de manière à pincer le tuyau 10, avec une composante de pincement axiale par l'action radiale du verrou 140. Ainsi le premier plan de serrage P129 et le deuxième plan de serrage P144 sont séparés d'un intervalle I100, mesuré parallèlement à l'axe longitudinal A100, inférieur à 5 mm, préférablement inférieur à 2 mm. Avantageusement, le premier plan de serrage P129 est tenu à distance de la surface de butée 125, par exemple P129 et la surface 124 sont séparés d'un intervalle de 2 cm mesuré parallèlement à l'axe longitudinal A100, de sorte que la portion de surface externe 12B du tuyau susceptible d'être définitivement pincée sur une canule distincte par un collier de serrage non-représenté est distincte de la portion de surface externe 12B du tuyau pincée par les verrous 140 de l'élément femelle 100 de façon temporaire.

On appelle portion de serrage 129C une portion d'une surface externe de la canule 120 qui s'étend en regard de la surface interne 150 de serrage de chaque verrou 140. La portion de serrage 129C est donc ici située à l'arrière de la portion proximale 129B du renflement circonférentiel 128 et présente une forme de cylindre à section circulaire et centrée sur l'axe longitudinal A100. La portion de serrage 129C et la surface interne 150 de chaque verrou 140 délimitent entre elles un espace annulaire de serrage V129, qui loge le tuyau 10 emmanché sur la canule 120. Chaque verrou 140 applique ainsi une force sur une large surface de retenue du tuyau 10, ce qui contribue au maintien du tuyau 10 et évite de maquer le tuyau 10.

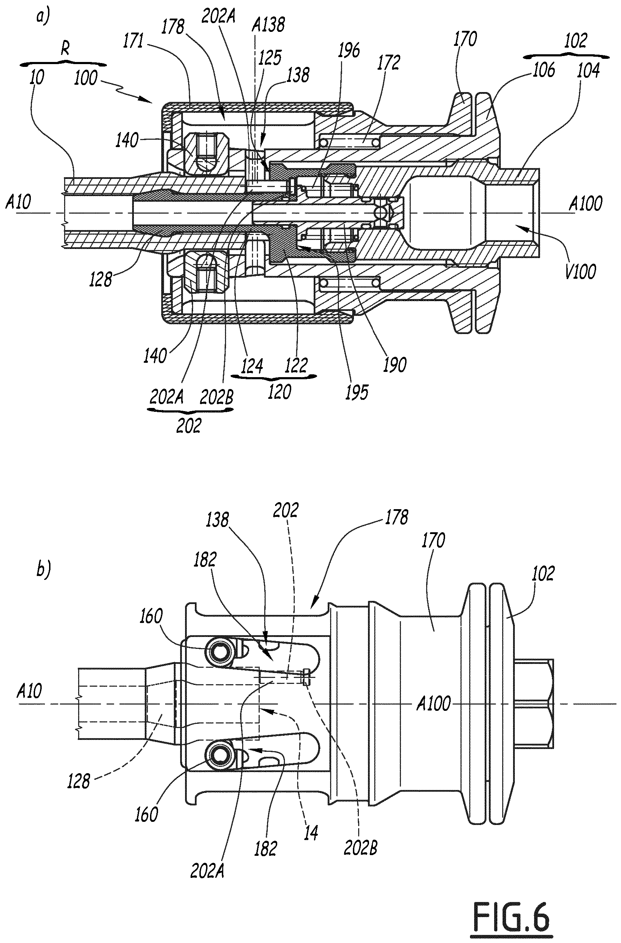

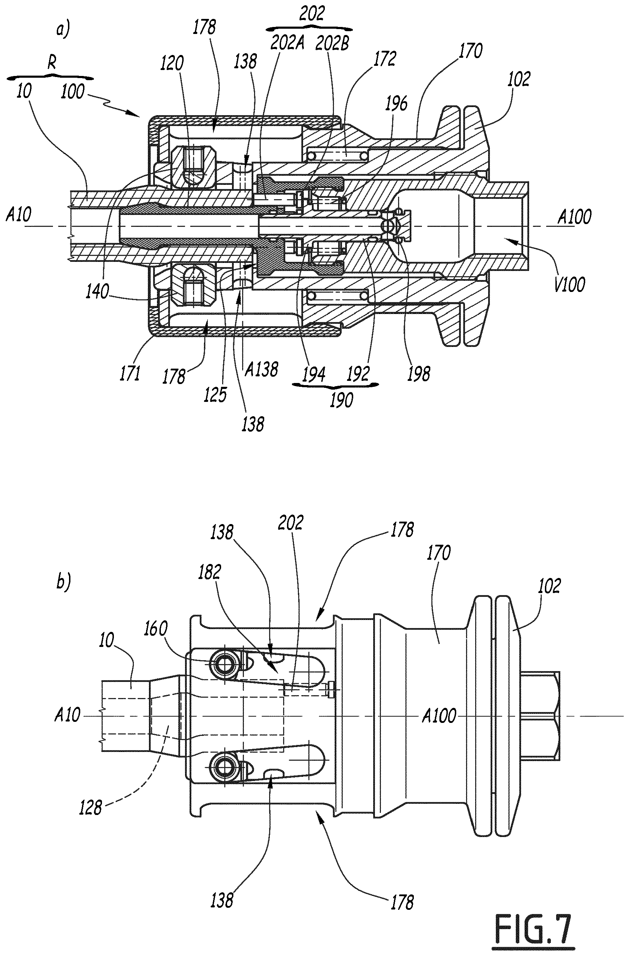

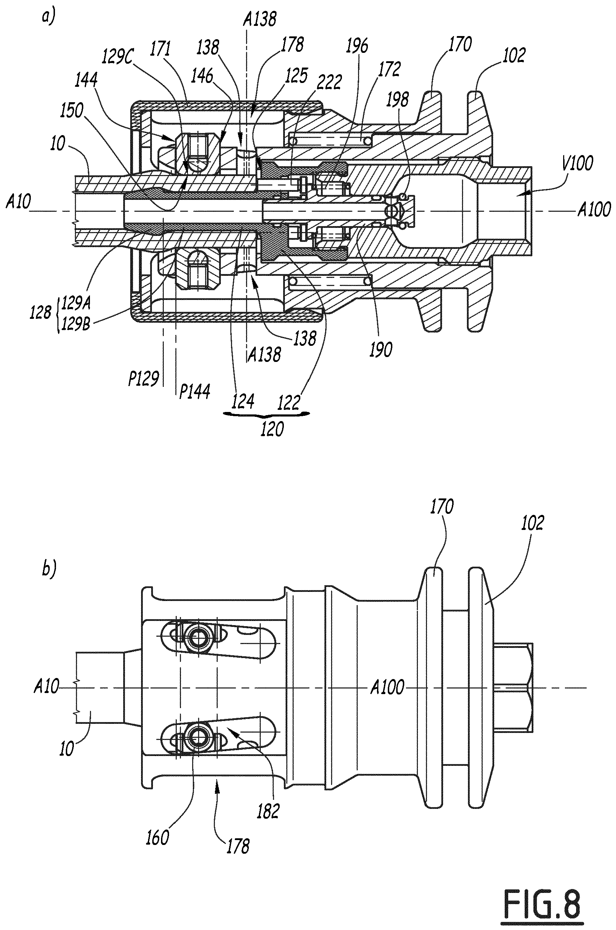

Avantageusement, l'élément femelle 100 comprend aussi une soupape 190, qui est ici partiellement reçue dans le passage V100 et qui est mobile par rapport au corps 102 entre une position avancée, dans laquelle la soupape obture le passage V100, et une position reculée, dans laquelle la soupape n'obture pas ce passage. La position avancée est donc une position de fermeture, tandis que la position reculée est une position d'ouverture. La soupape 190 est représentée en position avancée sur les figures 1 et 6, et en position reculée sur les figures 7 et 8.

Dans l'exemple illustré, la soupape 190 comprend un corps principal 192, de forme cylindrique centré sur l'axe longitudinal A100, et un collet 194, qui est ménagé en saillie sur le corps principal 192 radialement à l'axe longitudinal A100. Le collet 194 est ici reçu dans une cavité V122 ménagée par l'embase 122 de la canule 120. Le collet 194 est configuré pour venir en butée contre une paroi 195 du corps 102, cette paroi 195 formant un siège, lorsque la soupape 190 est en position avancée. La soupape 190 comprend aussi un deuxième organe de rappel, ici un ressort de soupape 196, qui rappelle la soupape 190 vers sa position avancée de fermeture. Dans l'exemple illustré, le ressort de soupape 196 est reçu dans la cavité V122 et repousse le collet 194 vers l'avant.

La soupape 190 comprend des joints 198, qui sont ici des joints annulaires logés dans des rainures ménagées sur une partie arrière du corps principal 192 et qui assurent l'étanchéité de la soupape 190 en position avancée.

Les mouvements de la soupape 190 sont commandés par le tuyau 10 lorsque le tuyau 10 est emmanché sur la canule 120. Plus précisément, la soupape 190 est configurée pour passer de sa position avancée vers sa position reculée lorsqu'un tuyau 10 est emmanché sur la canule 120 et vient en butée contre la surface de butée 125.

Dans l'exemple illustré, le corps 102 présente des logements, ici des alésages 200, qui sont ménagés au travers de l'embase 122 parallèlement à l'axe longitudinal A100 et qui débouchent chacun, d'une part, sur la surface de butée 125 et, d'autre part, dans la cavité V122 de l'embase 122, en regard du collet 194. Les alésages 200 sont ici au nombre de cinq et sont répartis régulièrement, en étoile, autour de l'axe longitudinal A100.

Chacun des alésages 200 reçoit un doigt de commande 202 respectif, chaque doigt de commande 202 présentant une forme allongée et comprenant une portion avant 202A et une portion arrière 202B opposée à la portion avant 202A. Chaque doigt 202 est mobile, en translation dans un alésage 200, par rapport au corps 102, parallèlement à l'axe longitudinal A100, entre une position émergée, dans laquelle la portion avant 202A de ce doigt de commande 202 émerge de la surface de butée 125, et une position retirée, dans laquelle la portion avant 202A n'émerge pas de la surface de butée 125. Pour chaque doigt de commande 202, lorsque ce doigt 202 est dans sa position émergée, la portion arrière 202B n'émerge pas dans la cavité V122, tandis qu'en position retirée de ce doigt, la portion arrière 202B de ce doigt 202 émerge dans la cavité V122. Le collet 194, armé par le ressort de soupape 196, tend ainsi à repousser les doigts de commande 202 vers leur position émergée. Les alésages 200 sont agencés de sorte que la portion avant 202A de chaque doigt de commande 202 est accessible à la face avant 14 du tuyau 10 lors ce tuyau est emmanché sur la canule 120 et est approché de la surface de butée 125.

On comprend que lorsque le tuyau 10 est emmanché sur la canule 120 et vient en butée contre la surface de butée 125, l'extrémité du tuyau 10 repousse les doigts de commande 202 de leur position émergée vers leur position retirée, repoussant aussi le collet 194, et donc la soupape 190 de sa position avancée vers sa position reculée.

Plus généralement, les doigts de commande 202 sont un exemple de réalisation d'un organe de commande, qui est configuré pour repousser la soupape 190 de sa position avancée vers sa position reculée lorsque le tuyau 10 est emmanché sur la canule 120 et déplace la portion avant 202A de l'organe de commande de sa position émergée vers sa position retirée.

On décrit à présent le fonctionnement de l'élément femelle 100 et du raccord R, à l'aide des figures 1 et 6 à 8.

Sur la figure 1, le raccord est dans la configuration désaccouplée. Le ressort de compression 172 repousse la bague de manoeuvre 170 en position de verrouillage, ce qui maintient les verrous 140 dans leur première position dans le volume de réception 126. Chaque galet 160 est en butée en fond de la rainure de guidage 182 respective, du côté arrière de la bague de manoeuvre 170.

Le ressort de soupape 196 repousse la soupape 190 dans sa position avancée de fermeture, tandis que le collet 194 repousse les doigts de commande 202 dans leur position émergée.

Chaque première lumière 138 est agencée de manière à permettre l'observation, selon l'axe de visée A138 correspondant, des portions avant 202A des doigts de commande 202 tant que les portions avant 202A émergent de la surface de butée 125. Autrement dit, chaque première lumière 138 permet l'observation des organes de commande 202 en position émergée.

Avantageusement, le passage radial 178 coïncide avec les premières lumières 138, lorsque la bague de manœuvre est dans la position de verrouillage, de manière à permettre l'observation au travers de la première lumière, de la portion avant 202A des doigts de commande 202 tant que la portion avant 202A émerge de la surface de butée 125. En particulier, le capot 171, qui couvre la première lumière 138 et la deuxième lumière 178 et qui est transparent, ne gêne pas l'observation par le passage radial 178 selon l'axe de visée A138.

Pour accoupler le tuyau 10 et l'élément femelle 100, l'axe de tuyau A10 est aligné avec l'axe longitudinal A100 de l'élément femelle 100 pour former ensemble l'axe d'emmanchement du raccord R. Le tuyau 10 est disposé face à l'embouchure 126 et est emmanché sur la canule 120, selon un mouvement d'emmanchement. Le mouvement d'emmanchement du tuyau 10 est un mouvement de translation du tuyau 10 par rapport à l'élément femelle 100, parallèlement à l'axe d'emmanchement du raccord R, la face avant 14 du tuyau 10 étant rapprochée de la face de butée 125. Dans le même temps, un opérateur déplace la bague de manœuvre 170 vers sa position de déverrouillage, ce qui entraine les verrous 140 de leur première position vers leur deuxième position, libérant ainsi l'accès à l'embouchure 126 du volume de réception V110.

Tout en maintenant la bague de manœuvre 170 dans sa position de déverrouillage, l'opérateur poursuit le mouvement d'emmanchement du tuyau 10 sur la canule 120, le tuyau 10 accommodant, par déformation élastique, le passage du renflement circonférentiel 128. Alors que le mouvement d'emmanchement se poursuit, la face avant 14 du tuyau 10 vient en appui contre les doigts de commande 202. Cette deuxième configuration du raccord R est illustrée à la figure 6.

Avantageusement, le passage radial 178 coïncide avec les premières lumières 138, lorsque la bague de manœuvre est dans la position de déverrouillage, de manière à permettre l'observation au travers de la première lumière 138, de la portion avant 202A des doigts de commande 202 tant que la portion avant 202A émerge de la surface de butée 125. Ainsi, le passage radial 178 est un exemple de deuxième lumière, qui coïncide avec chaque première lumière 138, lorsque la bague de manœuvre 170 est dans la position de déverrouillage, de manière à permettre l'observation au travers de chaque première lumière 138 des doigts de commande 202 en position émergée. Le capot 171 permet aussi l'observation de la position de chaque galets 160 dans sa rainure de guidage 182 respective.

À partir de la deuxième configuration de la figure 6, alors que le mouvement d'emmanchement du tuyau 10 sur la canule se poursuit, la face avant 14 du tuyau 10 se rapproche de la face de butée 125, repoussant les doigts de commande 202 de leur position émergée vers leur position retirée, ce qui repousse la soupape 190 de sa position avancée vers sa position reculée. Le raccord R parvient alors dans sa troisième configuration représentée à la figure 7. Autrement dit, le mouvement d'emmanchement du tuyau 10 entraine l'ouverture de la soupape 190. La présence et la position du tuyau 10 sont visualisables à travers la première lumière 138, le passage radial 178 et le capot 171, de sorte que l'opérateur peut s'assurer que la configuration de connexion est satisfaisante.

La bague de manœuvre 170 est maintenue dans sa position de déverrouillage tout au long du mouvement d'emmanchement. Le mouvement d'emmanchement continue jusqu'à ce que le tuyau 10 arrive en butée contre la surface de butée 125. Le raccord R est alors dans la configuration de la figure 7. La soupape 190 est en position reculée d'ouverture.

À partir de la troisième configuration de la figure 7, si l'opérateur libère la bague de manœuvre 170, le ressort de compression 172 repousse la bague de manœuvre 170 vers sa position de verrouillage, ce qui entraine chaque verrou 140 de sa deuxième position vers sa première position. Au cours de ce mouvement, les surface internes 150 des verrous 140 entrent en contact avec le tuyau 10 et pressent radialement le tuyau 10 contre la canule 120. La position de chaque verrou 10 est déterminée par l'équilibre entre une force exercée par les verrous 140 sur le tuyau 10 et une force de retour élastique du tuyau 10 ainsi pincé. Le raccord R est alors dans une quatrième configuration accouplée, représentée en figure 8. Du fait de l'action radiale des verrous 140 et des frottements du tuyau 10 sur la canule 120, il n'est pas possible de désaccoupler le raccord R simplement en tirant sur le tuyau 10. L'accouplement du raccord R est ainsi sécurisé.

Dans la configuration accouplée, les galets 160 ne sont pas en butée contre l'une des extrémités de la rainure de guidage 182 correspondante, mais sont dans une position intermédiaire dans leur rainure de guidage 182 respective. On comprend que le raccord R offre en accouplement sécurisé en accommodant les variations d'épaisseur E10 du tuyau 10.

À partir de la configuration accouplée, si l'opérateur souhaite désaccoupler le raccord R, l'opérateur doit tout d'abord déplacer la bague de manoeuvre 170 vers sa position de déverrouillage, ici vers l'arrière. Cette opération équivaut à la figure 6 représentant la deuxième configuration à la connexion. Ce faisant, l'opérateur déplace les verrous 140 vers leur deuxième position. Le tuyau 10 n'étant plus maintenu par les verrous 140, l'opérateur peut retirer le tuyau 10 selon un mouvement inverse du mouvement d'emmanchement. Au cours de ce mouvement inverse, l'opérateur vérifie, à travers la première lumière 138, le passage radial 178 et le capot 171, que les portions avant 202A émergent bien de la surface de butée 125, ce qui indique que la soupape 190 repasse bien de sa position reculée d'ouverture vers sa position avancée de fermeture.

Une fois que la canule 120 est entièrement retirée du tuyau 10, l'opérateur peut relâcher la bague de manoeuvre 170 et laisser la bague de manoeuvre 170 reprendre sa position de verrouillage. Le raccord R est alors revenu dans la première configuration désaccouplée de la figure 1.

On décrit à présent d'autres modes de réalisation de l'invention. Dans les autres modes de réalisation, les éléments analogues à ceux du ou des modes de réalisation précédemment décrits portent les mêmes références et fonctionnent de la même façon. Dans ce qui suit, on décrit principalement les différences entre chaque mode de réalisation et le ou les précédents.

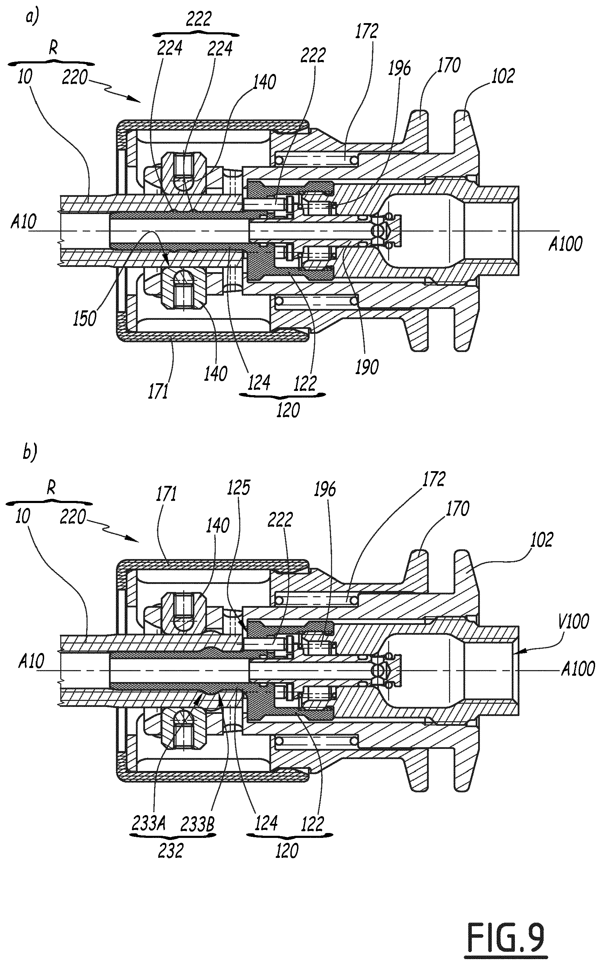

Un élément femelle 220 conforme à un deuxième mode de réalisation de l'invention est représenté, en configuration accouplée, à la figure 9 a). Alors que dans le premier mode de réalisation, le renfoncement circonférentiel 128 est agencé à l'avant de chaque verrou 140, dans le deuxième mode de réalisation l'élément femelle 220 comprend un renflement circonférentiel 222 qui est aligné radialement avec la surface interne 150 de serrage de chaque verrou 140 par rapport à l'axe longitudinal A100. Le renflement circonférentiel 222 est ici réalisé par deux saillies annulaires 224, qui sont ménagées en saillie de la portion avant 124 de la canule 120. Les deux saillies 224 forment des bosses, qui sont situées en regard des surfaces internes 150 de serrage, ce qui améliore la retenue du tuyau 10 lorsque le raccord R est en configuration accouplée.

Avantageusement, les saillies annulaires 224 et la portion avant 124 présentent une forme complémentaire des surfaces internes 150 des verrous 140, de manière à améliorer plus encore la retenue du tuyau 10 lorsque le raccord R est en configuration accouplée.

Avantageusement, les saillies annulaires 224 présentent un dépassement radial réduit par rapport à la portion avant 124, le dépassement radial étant mesuré radialement à l'axe longitudinal A100. Par « dépassement radial réduit », on entend qu'un diamètre externe des saillies annulaires 224 est inférieur à 110% d'un diamètre externe de la portion avant 124, de préférence inférieur à 105% du diamètre externe de la portion avant 124. En comparaison, dans l'exemple du premier mode, le dépassement radial du renflement circonférentiel 128 est supérieur à 115%.

Ainsi, au cours du mouvement d'emmanchement du tuyau 10 sur la canule 120, alors que le tuyau 10 se déforme élastiquement pour franchir le renflement circonférentiel, la déformation élastique du tuyau 10 requise pour franchir le renflement 222 du deuxième mode de réalisation est inférieure à la déformation élastique du tuyau 10 requise pour franchir le renflement 128 du premier mode de réalisation. Autrement dit, l'effort nécessaire pour emmancher le tuyau 10 sur la canule 120 et mettre le tuyau 10 en butée contre la surface de butée 125 est inférieur dans le deuxième mode par rapport au premier mode.

Plus généralement, les saillies annulaires 224 du deuxième mode de réalisation réalisent à la fois un bon maintien du tuyau 10 en coopération avec les verrous 140, tout en facilitant la connexion de l'élément femelle 220 et du tuyau 10.

Un élément femelle 230 conforme à un troisième mode de réalisation de l'invention est représenté à la figure 9 b).

L'élément femelle 230 comprend un renflement circonférentiel 232 qui est essentiellement situé à l'arrière des verrous 140, entre les verrous 140 et la surface de butée 125. De préférence, le renflement circonférentiel 232 est plus proche, le long de l'axe longitudinal A100, de la surface de butée 125 que des verrous 140. Le renflement 232 comprend ici une rampe avant 233A, qui est divergente vers l'arrière, et une rampe arrière 233B, qui est convergente vers l'arrière.

Lorsque le raccord R est en configuration accouplée, cet agencement du renflement circonférentiel 232 permet de pincer le tuyau 10 entre la rampe avant 233A et chaque verrou 140, de manière à créer une contrainte de pincement inclinée par rapport à l'axe longitudinal A100.

Avantageusement, la rampe arrière 233B est tenue à une distance réduite de la surface de butée 125, par exemple la rampe arrière 233B et la surface de butée 125 sont séparées d'un intervalle de 1 cm mesuré parallèlement à l'axe longitudinal A100, de sorte que la portion de surface externe 12B du tuyau 10 sollicitée par les verrous 140 est proche de la face avant 14 du tuyau 10, réduisant la section de tuyau à couper s'il semblait utile à l'opérateur d'écourter le tuyau 10 de façon modérée, afin de supprimer uniquement une courte portion extrémale du tuyau potentiellement marquée par la répétition de serrage des verrous 140 de l'élément 100.

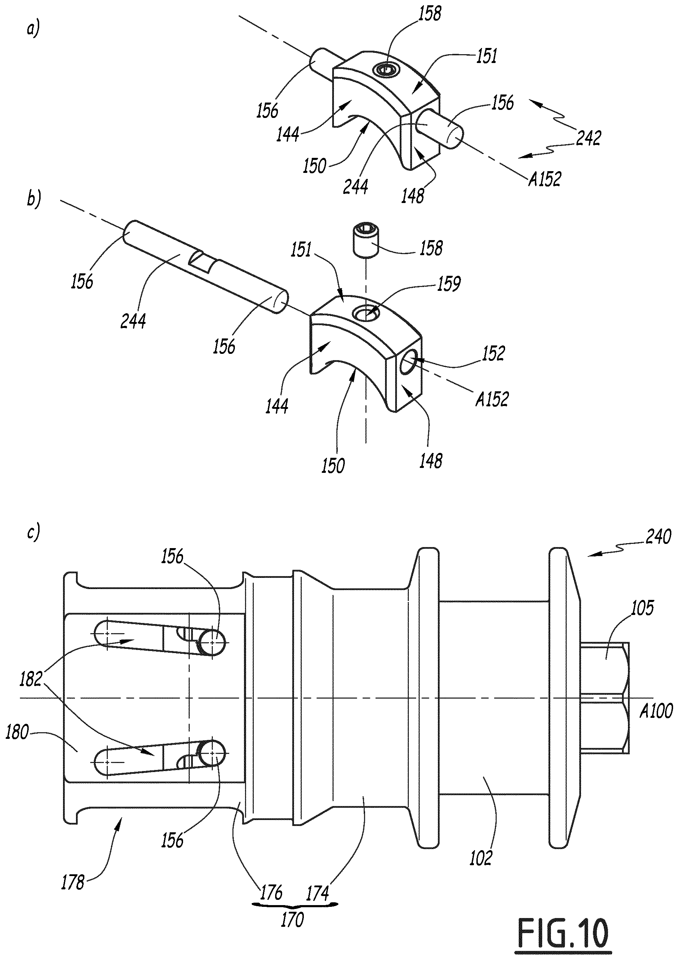

Un élément femelle 240 conforme à un quatrième mode de réalisation de l'invention est représenté à la figure 10, certaines pièces étant cachées.

L'élément femelle 240 comprend un verrou 242, avec une tige 244 dont les extrémités dépassent des faces latérales 148 et forment les pions 156, qui sont configurés pour être directement reçus dans les rainures de guidage 182 correspondante, sans galet du type des galets 160.

Les verrous 242 du deuxième mode de réalisation sont plus facile à fabriquer que les verrous 140 du premier mode de réalisation mais, en cas d'usure des pions 156, la tige 154 doit être entièrement remplacée, alors que dans le premier mode de réalisation seuls les galets 160 doivent être remplacés.

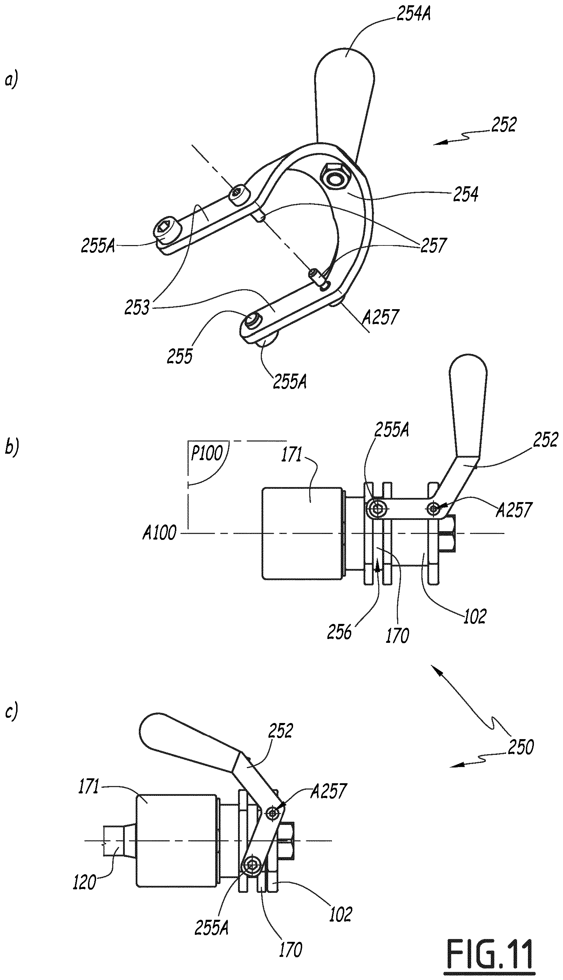

Un élément femelle 250 conforme à un cinquième mode de réalisation de l'invention est représenté à la figure 11.

L'élément femelle 250 du cinquième mode de réalisation comprend un levier 252, qui permet l'actionnement de la bague de manoeuvre 170 avec un bras de levier.

Dans l'exemple illustré, le levier 252 comprend un arceau 252, qui présente deux branches 253 reliées par une portion intermédiaire 254. L'arceau 252 est monté à cheval sur le corps 102 de l'élément femelle 250.

Le levier 252 comprend une portion de préhension, ici une poignée 254A, qui est fixée sur la portion intermédiaire 254. Le levier 252 comprend aussi, à une extrémité libre de chacune des branches 253, deux patins 255, qui sont agencés en regard l'un de l'autre et qui sont chacun configurés pour coopérer avec une rainure 256 respective ménagée à l'extérieur de la bague de manoeuvre 170. Les rainures 256 sont ménagées de part et d'autre du plan longitudinal P100 de l'élément femelle 250 et s'étendent chacune selon un axe orthoradial à l'axe longitudinal A100.

Les extrémités libres des branches 253 et les patins 255 associés forment ensemble une portion de guidage du levier 252. Les patins 255 sont avantageusement réalisés en un matériau résistant et réduisant les frottements, notamment un alliage cuivreux, en particulier en bronze. Les deux patins 255 sont ici fixés aux branches 253 au moyen de vis 255A.

Le levier 252 comprend aussi deux pions pivots 257, qui sont chacun fixés à une branche 253 respective entre la poignée 254A et le patin 255 correspondant. Les deux pions pivots 257 sont agencés en regard l'un de l'autre et sont alignés selon un axe de pivot A257 du levier 252. Les deux pions pivots 257 sont configurés pour être reçus dans des alésages ménagés dans le corps 102, de sorte que le levier 252 est monté mobile en rotation par rapport au corps 102 autour de l'axe de pivot A257, l'axe de pivot A257 étant orthoradial à l'axe longitudinal A100. Les alésages recevant les pions pivots 257 ne sont pas représentés.

Le levier 252 est monté mobile en rotation par rapport au corps 102 autour de l'axe de pivot A257 entre une position relevée, représentée sur la figure 11 b), et une position abaissée, représentée sur la figure 11 c).

La poignée 254A est configurée pour être saisie par un utilisateur de manière à faire pivoter le levier 252 autour de l'axe de pivot A257 entre sa position relevée et sa position abaissée. Lorsque le levier 252 est déplacé entre sa position relevée et sa position abaissée, les patins 255, reçus dans les rainures 256, entrainent la bague de manœuvre 170 en translation le long de l'axe longitudinal A100 entre sa position de verrouillage et sa position de déverrouillage, à l'encontre du ressort de compression 172 qui n'est pas visible sur la figure 11, mais qui est le même que dans le premier mode de réalisation. Le levier 252 facilite le déplacement de la bague de manœuvre 170 à l'encontre du ressort de compression 172, ce qui en conséquence permet d'utiliser un ressort de compression 172 appliquant des efforts de serrage du tuyau 10 plus importants, par exemple lorsque l'élément femelle 10 est utilisé dans des applications de pression ou des diamètres de tuyau 10 plus important.

Dans les modes de réalisation représentés, lorsque le ressort de compression 172 rappelle la bague de manœuvre 170 vers sa position de verrouillage, la bague de manœuvre 170 entraine chaque verrou 140 vers sa première position. Autrement dit, le ressort de compression 172 est un organe de rappel, qui est configuré pour rappeler chaque verrou 140 dans sa première position. Dans les modes de réalisation représentés, l'organe de rappel applique sur chaque verrou 140 un effort présentant une composante centripète à l'axe longitudinal A100 par l'intermédiaire de la bague de manœuvre 170.

En variante non représentée, l'organe de rappel inclut, pour chaque verrou 140, un ressort qui applique directement sur chaque verrou 140 un effort centripète à l'axe longitudinal A100, de manière à rappeler le verrou 140 correspondant de sa deuxième position à sa première position. Par exemple, des ressorts radiaux sont placés entre chacun des verrous 140 et le capot 171, ces ressorts radiaux étant mis en compression radialement à l'axe longitudinal A100.

Selon une autre variante non représentée, qui n'est pas comprise dans le cadre des revendications, le ressort de compression 172 est absent, tandis que l'élément femelle comprend un levier du type du levier 252, qui commande positivement le verrouillage et le déverrouillage de l'élément femelle.

Dans les modes de réalisation représentés, les rainures de guidage 182 s'éloignent de l'axe longitudinal A100 à mesure qu'elles se rapprochent de l'avant de l'élément femelle 100, 220, 230, 240 et 250, tandis que la position de déverrouillage de la bague de manœuvre 170 est une position axialement reculée, le long de l'axe longitudinal A100, par rapport à la position de verrouillage.

En variante non représentée, les rainures de guidage 182 s'éloignent de l'axe longitudinal A100 à mesure qu'elles se rapprochent de l'arrière de l'élément femelle, tandis que la position de déverrouillage de la bague de manoeuvre 170 est une position axialement avancée, le long de l'axe longitudinal A100, par rapport à la position de verrouillage.

Les formes des renflements circonférentiels 128, 222 et 232 des premier, deuxième et troisièmes modes de réalisation ne sont pas limitatives. Plus généralement, toute excroissance radiale - nervure, cannelure, picot, etc. - ménagée sur la portion avant 124 de la canule 120 et configurée pour coopérer avec les verrous 140 pour maintenir le tuyau 10 constitue un renflement circonférentiel.

En variante non représentée, selon une configuration miroir du troisième mode de réalisation, un renflement est prévu sur la surface interne 150 de serrage du verrou 140, tandis qu'une dépression circonférentielle est ménagée en creux sur la canule 120, de manière à pincer le tuyau 10.

En variante non représentée, on prévoit des surface internes 150 tronconiques divergentes du côté avant du raccord. Avantageusement à la connexion selon cette variante, l'emmanchement du tuyau repousse radialement les verrous 130 à l'encontre de l'effort de ressort 172 sans que l'opérateur n'ait besoin d'agir sur la bague de manoeuvre 170.

Les modes de réalisation et les variantes mentionnées ci-dessus peuvent être combinés entre eux pour générer de nouveaux modes de réalisation de l'invention, tant qu'ils sont couverts par le texte de revendications.

## Revendications

1. Élément femelle (100 ; 220 ; 230 ; 240 ; 250) de raccord rapide (R), configuré pour se connecter à un tuyau (10) souple, l'élément femelle comprenant :
- un corps (102) :
• qui s'étend selon un axe longitudinal (A100) et qui définit un volume de réception (V110) du tuyau souple, le volume de réception présentant une forme de révolution autour de l'axe longitudinal et débouchant du corps par une embouchure (126), l'embouchure définissant un côté avant de l'élément femelle,
• qui comprend une surface de butée (125), qui est située dans un plan orthogonal à l'axe longitudinal et qui est orientée vers l'avant de l'élément femelle, la surface de butée délimitant le volume de réception du côté arrière de l'élément femelle, le côté arrière étant opposé au côté avant,
- une canule (120) :
• qui est solidaire du corps (102) d'élément femelle et qui s'étend dans le volume de réception (V110) à partir de la surface de butée (125),
• qui comprend un corps creux (124) présentant une forme de révolution autour de l'axe longitudinal (A100), le corps creux délimitant un canal (V120) qui débouche, d'une part, du côté avant de l'élément femelle et, d'autre part, dans un passage (V100) ménagé dans l'élément femelle du côté arrière,
• qui comprend une surface externe,
dans lequel l'élément femelle comprend aussi :
- au moins une ouverture radiale (130), chaque ouverture radiale étant ménagée dans le corps (102) de l'élément femelle selon un axe de guidage (A130) radial à l'axe longitudinal (A100), chaque ouverture radiale débouchant dans le volume de réception (V110),
- au moins un verrou (140), chaque verrou étant reçu dans une ouverture radiale respective et étant mobile en translation par rapport au corps (102) suivant l'axe de guidage (A130) correspondant entre une première position, dans laquelle ce verrou pénètre dans le volume de réception (V110), et une deuxième position, dans laquelle ce verrou est plus éloigné de l'axe longitudinal (A110) que dans la première position, chaque verrou comprenant une surface interne (150) de serrage du tuyau orientée vers l'axe longitudinal (A100) en regard de la surface externe de la canule (120),
- un organe de rappel (172), configuré pour rappeler chaque verrou dans sa première position,
- une bague de manœuvre (170), qui est disposée autour du corps (102) coaxialement à l'axe longitudinal (A100) et qui est mobile en translation par rapport au corps le long de l'axe longitudinal, entre une position de verrouillage et une position de déverrouillage,
**caractérisé en ce que** :
- chaque verrou (140) comprend des pions (156), qui s'étendent chacun selon une direction orthogonale à l'axe de guidage (A130) correspondant et orthoradiale à l'axe longitudinal (A100),
- la bague de manœuvre (170) comprend des rainures de guidages (182), qui coopèrent avec les pions de chaque verrou (140), les rainures de guidage associées à chaque verrou étant géométriquement portées par un plan de guidage (P182) incliné par rapport à l'axe longitudinal (A100), de manière que :
• chaque verrou (140) est entrainé de sa deuxième position vers sa première position lorsque la bague de manœuvre (170) est déplacée de sa position de déverrouillage vers sa position de verrouillage, et
• chaque verrou est entrainé de sa première position vers sa deuxième position lorsque la bague de manœuvre est déplacée de sa position de verrouillage vers sa position de déverrouillage.

2. Elément femelle (100 ; 220 ; 230 ; 240 ; 250) selon la revendication 1, **caractérisé en ce que** l'organe de rappel (172) est configuré pour rappeler la bague de manœuvre (170) vers sa position de verrouillage, et **en ce que** la bague de manœuvre entraine chaque verrou (140) vers sa première position lorsque l'organe de rappel rappelle la bague de manœuvre vers sa position de verrouillage.

3. Élément femelle (100 ; 220 ; 230 ; 240 ; 250) selon l'une quelconque des revendications 1 ou 2, **caractérisé en ce que** les rainures de guidage (182) s'éloignent de l'axe longitudinal (A100) à mesure qu'elles se rapprochent de l'avant de l'élément femelle, la position de déverrouillage de la bague de manœuvre (170) étant une position axialement reculée, le long de l'axe longitudinal, par rapport à la position de verrouillage.

4. Elément femelle (100 ; 220 ; 230 ; 240 ; 250) selon l'une quelconque des revendications 1 à 3, **caractérisé en ce que** l'organe de rappel applique à chaque verrou (140) un effort centripète, qui tend à déplacer chaque verrou de sa deuxième position à sa première position.

5. Elément femelle (220) selon l'une quelconque des revendications 1 à 4, **caractérisé en ce que** la canule (120) présente un renflement circonférentiel (222) qui est aligné radialement avec la surface interne (150) de serrage de chaque verrou (140) par rapport à l'axe longitudinal (A100).

6. Elément femelle (100 ; 240 ; 250) selon l'une quelconque des revendications 1 à 4, **caractérisé en ce que** :
- la surface interne (150) de serrage de chaque verrou (140) s'étend géométriquement du côté arrière d'un premier plan de serrage (P144), qui est orthogonal à l'axe longitudinal (A100),
- la canule (120) comprend un renflement circonférentiel (128), qui est ménagé sur la surface externe de la canule (120) et qui est situé à l'avant du premier plan de serrage (P144) de chaque verrou.

7. Elément femelle (100 ; 240 ; 250) selon la revendication 6, **caractérisé en ce que** le renflement circonférentiel (128) comprend :
- une portion proximale (129B) évasée, qui est divergente vers l'avant de l'élément femelle et qui est agencée en regard de chaque verrou (140), et
- une portion distale (129A) évasée divergente vers l'arrière de l'élément femelle.

8. Elément femelle (100 ; 240 ; 250) selon la revendication 7, **caractérisé en ce que** :
- la portion proximale (129B) du renflement est délimitée, vers l'arrière, par un deuxième plan de serrage (P129), qui est parallèle au premier plan de serrage (P144),
- le premier plan de serrage et le deuxième plan de serrage sont séparés d'un intervalle (I100) inférieur à 5 mm, préférablement inférieur à 2 mm.

9. Elément femelle (100 ; 240 ; 250) selon l'une quelconque des revendications 6 à 8, **caractérisé en ce que** :
- la surface externe de la canule (120) comprend une portion de serrage (129C), qui est située à l'arrière de la portion proximale (129B) du renflement circonférentiel (128) et qui s'étend en regard de la surface interne (150) de serrage de chaque verrou (140),
- la portion de serrage (129C) et la surface interne (150) délimitent entre eux un espace annulaire de serrage (V129), et
- la portion de serrage (129C) présente une forme de cylindre de section circulaire.

10. Elément femelle (100 ; 220 ; 230 ; 240 ; 250) selon l'une quelconque des revendications 1 à 9, **caractérisé en ce que** l'élément femelle comprend :
- une soupape (190), qui est en partie reçue dans le passage (V100) et qui est mobile par rapport au corps (102) entre une position avancée, dans laquelle la soupape obture le passage, et une position reculée, dans laquelle la soupape n'obture pas le passage,
- un deuxième organe de rappel (196), qui rappelle la soupape vers sa position avancée,
- la soupape est configurée pour passer de la position avancée vers la position reculée lorsqu'un tuyau (10) est emmanché sur la canule (120) et vient en butée contre la surface de butée (125).

11. Elément femelle (100 ; 220 ; 230 ; 240 ; 250) selon la revendication 10, **caractérisé en ce que** :
- le corps (102) présente un logement (200), qui débouche sur la surface de butée (125),
- l'élément femelle comprend un organe de commande (202), qui est reçu dans le logement et qui est mobile en translation par rapport au corps parallèlement à l'axe longitudinal (A100), entre une position émergée, dans laquelle une portion avant (202A) de l'organe de commande émerge de la surface de butée, et une position retirée, dans laquelle la portion avant n'émerge pas de la surface de butée,
- l'organe de commande est configuré pour repousser la soupape (190) de la position avancée vers la position reculée lorsque le tuyau (10) est emmanché sur la canule (120) et déplace la portion avant de l'organe de commande de sa position émergée vers sa position retirée.

12. Elément femelle (100 ; 220 ; 230 ; 240 ; 250) selon la revendication 11, **caractérisé en ce que** :
- le corps (102) comprend une première lumière (138) de visualisation,
• qui s'étend au travers du corps selon un axe de visée (A138) radial à l'axe longitudinal (A100),
• qui est ménagée à l'avant de la surface de butée (125), la première lumière débouchant dans le volume de réception (V110),
- la première lumière (138) est agencée de manière à permettre l'observation, au travers de la première lumière, de l'organe de commande (202) en position émergée.

13. Elément femelle (100 ; 220 ; 230 ; 240 ; 250) selon la revendication 12, **caractérisé en ce que** :
- la bague de manœuvre (170) comprend une deuxième lumière (178) de visualisation, qui s'étend au travers de la bague de manœuvre selon un axe de passage (A178) parallèle à l'axe de visée (A138),
- la deuxième lumière (178) est agencée pour coïncider avec la première lumière (138), lorsque la bague de manœuvre (170) est dans la position de déverrouillage, de manière à permettre l'observation au travers de la première lumière, de l'organe de commande (202) en position émergée.

14. Elément femelle (100 ; 220 ; 230 ; 240 ; 250) selon la revendication 13, **caractérisé en ce que** la bague de manœuvre (170) comprend une portion transparente (171), la portion transparente couvrant la première lumière (138) et la deuxième lumière (178) lorsque la bague de manœuvre (170) est dans la position de déverrouillage.

15. Elément femelle (250) selon l'une quelconque des revendications 1 à 14, **caractérisé en ce que** :
- l'élément femelle comprend un levier (252), qui est monté mobile en rotation par rapport au corps (102) autour d'un axe de pivot (A257) entre une position relevée et une position abaissée, l'axe de pivot étant orthoradial à l'axe longitudinal (A100),
- le levier (252) comprend une portion de guidage (253, 255), qui coopère avec la bague de manœuvre (170) de manière à conduire la bague de manœuvre (170) de la position de verrouillage à la position de déverrouillage, lorsque le levier est entraîné autour de son axe de pivot entre sa position relevée et sa position abaissée.

## Patentansprüche

1. Buchse (100; 220; 230; 240; 250) für Schnellanschluss (R), die konfiguriert ist, um mit einem Schlauch (10) verbindbar zu sein, die Buchse umfassend:
- einen Körper (102):
• die sich entlang einer Längsachse (A100) erstreckt und die ein Aufnahmevolumen (V110) des Schlauchs definiert, wobei das Aufnahmevolumen eine Form aufweist, die um die Längsachse verläuft und aus dem Körper durch eine Mündung (126) austritt, wobei die Mündung eine Vorderseite der Buchse definiert,
• der eine Anschlagfläche (125) umfasst, die in einer Ebene orthogonal zu der Längsachse ist und zu der Vorderseite der Buchse gerichtet ist, wobei die Anschlagfläche das Aufnahmevolumen auf der Rückseite der Buchse begrenzt, wobei die Rückseite gegenüber der Vorderseite ist,
- eine Kanüle (120):
• die fest mit dem Körper (102) der Buchse verbunden ist und sich von der Anschlagfläche (125) aus in das Aufnahmevolumen (V110) erstreckt,
• die einen Hohlkörper (124) umfasst, der eine Form aufweist, die um die Längsachse (A100) verläuft, wobei der Hohlkörper einen Kanal (V120) begrenzt, der einerseits von der Vorderseite der Buchse und andererseits in einen Durchgang (V100) mündet, der in der Buchse auf der Rückseite ausgebildet ist,
• die eine Außenfläche umfasst,
wobei die Buchse auch Folgendes umfasst:
- mindestens eine radiale Öffnung (130), wobei jede radiale Öffnung in dem Körper (102) der Buchse entlang einer Führungsachse (A130) radial zu der Längsachse (A100) ausgebildet ist, wobei jede radiale Öffnung in das Aufnahmevolumen (V110) mündet,
- mindestens einen Riegel (140), wobei jeder Riegel in einer jeweiligen radialen Öffnung aufgenommen ist und in Bezug auf den Körper (102) entlang der entsprechenden Führungsachse (A130) zwischen einer ersten Position, in der dieser Riegel in das Aufnahmevolumen (V110) eindringt, und einer zweiten Position, in der dieser Riegel weiter von der Längsachse (A110) entfernt ist als in der ersten Position, translatorisch beweglich ist, jeder Riegel umfassend eine Innenfläche (150) zum Einspannen des Schlauchs umfasst, die in Richtung der Längsachse (A100) gegenüber der Außenfläche der Kanüle (120) ausgerichtet ist,
- ein Rückholelement (172), das konfiguriert ist, um jeden Riegel in seine erste Position zurückzuholen,
- einen Betätigungsring (170), der um den Körper (102) koaxial zu der Längsachse (A100) angeordnet und der in Bezug auf den Körper entlang der Längsachse zwischen einer Verriegelungsposition und einer Entriegelungsposition translatorisch beweglich ist,
**dadurch gekennzeichnet, dass**:
- jeder Riegel (140) Stifte (156) umfasst, die sich jeweils in einer Richtung orthogonal zu der entsprechenden Führungsachse (A130) und orthoradial zu der Längsachse (A100) erstrecken,
- der Betätigungsring (170) Führungsnuten (182) umfasst, die mit den Stiften von jedem Riegel (140) zusammenwirken, wobei die mit jedem Riegel assoziierten Führungsnuten geometrisch von einer Führungsebene (P182) getragen werden, die in Bezug auf die Längsachse (A100) geneigt ist, sodass:
• jeder Riegel (140) aus seiner zweiten Position in seine erste Position angetrieben wird, wenn der Betätigungsring (170) aus seiner Entriegelungsposition in seine Verriegelungsposition bewegt wird, und
• jeder Riegel aus seiner ersten Position in seine zweite Position getrieben wird, wenn der Betätigungsring aus seiner Verriegelungsposition in seine Entriegelungsposition bewegt wird.

2. Buchse (100; 220; 230; 240; 250) nach Anspruch 1, **dadurch gekennzeichnet, dass** das Rückholelement (172) konfiguriert ist, um den Betätigungsring (170) in seine Verriegelungsposition zurückzuholen, und dass der Betätigungsring jeden Riegel (140) in seine erste Position antreibt, wenn das Rückholelement den Betätigungsring in seine Verriegelungsposition zurückholt.

3. Buchse (100; 220; 230; 240; 250) nach einem der Ansprüche 1 oder 2, **dadurch gekennzeichnet, dass** sich die Führungsnuten (182) entlang der Längsachse (A100) entfernen, je weiter sie sich der Vorderseite der Buchse annähern, wobei die Entriegelungsposition des Betätigungsrings (170) eine entlang der Längsachse in Bezug auf die Verriegelungsposition axial zurückversetzte Position ist.

4. Buchse (100; 220; 230; 240; 250) nach einem der Ansprüche 1 bis 3, **dadurch gekennzeichnet, dass** das Rückholelement eine zentripetale Kraft auf jeden Riegel (140) ausübt, die dazu neigt, jeden Riegel aus seiner zweiten Position in seine erste Position zu bewegen.

5. Buchse (220) nach einem der Ansprüche 1 bis 4, **dadurch gekennzeichnet, dass** die Kanüle (120) eine Umfangswölbung (222) aufweist, die radial mit der Innenfläche (150) zum Einspannen von jedem Riegel (140) in Bezug auf die Längsachse (A100) ausgerichtet ist.

6. Buchse (100; 240; 250) nach einem der Ansprüche 1 bis 4, **dadurch gekennzeichnet, dass**:
- die Innenfläche (150) zum Einspannen von jedem Riegel (140) sich geometrisch von der Rückseite einer ersten Einspannebene (P144) erstreckt, die orthogonal zu der Längsachse (A100) ist,
- die Kanüle (120) eine umlaufende Wölbung (128) aufweist, die an der Außenfläche der Kanüle (120) ausgebildet ist und sich vor der ersten Einspannebene (P144) von jedem Riegel befindet.

7. Buchse (100; 240; 250) nach Anspruch 6, **dadurch gekennzeichnet, dass** die umlaufende Wölbung (128) Folgendes umfasst:
- einen aufgeweiteten proximalen Abschnitt (129B), der zu der Vorderseite von der Buchse divergiert und der gegenüber von jedem Riegel (140) angeordnet ist, und
- einen aufgeweiteten distalen Abschnitt (129A), der von der Buchse zu der Rückseite divergiert.

8. Buchse (100; 240; 250) nach Anspruch 7, **dadurch gekennzeichnet, dass**:
- der proximale Abschnitt (129B) der Wölbung zu der Rückseite durch eine zweite Einspannebene (P129) begrenzt ist, die parallel zu der ersten Einspannebene (P144) ist,
- die erste Einspannebene und die zweite Einspannebene durch einen Abstand (I100) von weniger als 5 mm, vorzugsweise weniger als 2 mm, getrennt sind.

9. Buchse (100; 240; 250) nach einem der Ansprüche 6 bis 8, **dadurch gekennzeichnet, dass**:
- die Außenfläche der Kanüle (120) einen Einspannabschnitt (129C) umfasst, der sich hinter dem proximalen Abschnitt (129B) der umlaufenden Wölbung (128) befindet und sich gegenüber der Innenfläche (150) zum Einspannen von jedem Riegel (140) erstreckt,
- der Einspannabschnitt (129C) und die Innenfläche (150)
untereinander einen
ringförmigen Einspannraum (V129) begrenzen, und
- der Einspannabschnitt (129C) eine Zylinderform mit kreisförmigem Querschnitt aufweist.

10. Buchse (100; 220; 230; 240; 250) nach einem der Ansprüche 1 bis 9, **dadurch gekennzeichnet, dass** die Buchse Folgendes umfasst:
- ein Ventil (190), das teilweise in dem Durchgang (V100) aufgenommen ist und das in Bezug auf den Körper (102) zwischen einer vorgestellten Position, in der das Ventil den Durchgang verschließt, und einer zurückgezogenen Position, in der das Ventil den Durchgang nicht verschließt, bewegbar ist,
- ein zweites Rückholelement (196), das das Ventil in seine vorgestellte Position zurückholt,
- wobei das Ventil konfiguriert ist, um sich von der vorgestellten Position in die zurückgezogene Position zu bewegen, wenn ein Schlauch (10) auf die Kanüle (120) aufgesteckt wird und an der Anschlagfläche (125) anliegt.

11. Buchse (100; 220; 230; 240; 250) nach Anspruch 10, **dadurch gekennzeichnet, dass**:
- der Körper (102) eine Aufnahme (200) aufweist, die an der Anschlagfläche (125) mündet,
- die Buchse ein Steuerelement (202) umfasst, das in der Aufnahme aufgenommen ist und in Bezug auf den Körper parallel zu der Längsachse (A100) zwischen einer ausgefahrenen Position, in der ein vorderer Abschnitt (202A) des Steuerelements aus der Anschlagfläche hervorsteht, und einer zurückgezogenen Position, in der der vordere Abschnitt nicht aus der Anschlagfläche hervorsteht, translatorisch beweglich ist,
- das Steuerelement konfiguriert ist, um das Ventil (190) aus der vorgeschobenen Position wieder in die vorgestellte Position zu drücken, wenn der Schlauch (10) auf die Kanüle (120) aufgesteckt wird, und den vorderen Abschnitt des Steuerelements aus seiner hervorstehenden Position in seine zurückgezogene Position bewegt.

12. Buchse (100; 220; 230; 240; 250) nach Anspruch 11, **dadurch gekennzeichnet, dass**:
- der Körper (102) ein erstes Sichtlumen (138) umfasst,
• das sich entlang einer Zielachse (A138) durch den Körper radial zu der Längsachse (A100) erstreckt,
• das vor der Anschlagfläche (125) ausgebildet ist, wobei das erste Lumen in das Aufnahmevolumen (V110) mündet,
- das erste Lumen (138) ausgebildet ist, sodass durch das erste Lumen die Beobachtung des Steuerelements (202) in der ausgefahrenen Position ermöglicht wird.

13. Buchse (100; 220; 230; 240; 250) nach Anspruch 12, **dadurch gekennzeichnet, dass**:
- der Betätigungsring (170) ein zweites Sichtlumen (178) umfasst, das sich durch den Betätigungsring entlang einer Durchgangsachse (A178) parallel zu der Zielachse (A138) erstreckt,
- das zweite Lumen (178) angeordnet ist, um mit dem ersten Lumen (138) zusammenzufallen, wenn der Betätigungsring (170) in der Entriegelungsposition ist, sodass das Steuerelement (202) in der ausgefahrenen Position durch das erste Lumen beobachtet werden kann.

14. Buchse (100; 220; 230; 240; 250) nach Anspruch 13, **dadurch gekennzeichnet, dass** der Betätigungsring (170) einen transparenten Abschnitt (171) umfasst, wobei der transparente Abschnitt das erste Lumen (138) und das zweite Lumen (178) abdeckt, wenn der Betätigungsring (170) in der Entriegelungsposition ist.

15. Buchse (250) nach einem der Ansprüche 1 bis 14, **dadurch gekennzeichnet, dass**:
- die Buchse einen Hebel (252) umfasst, der in Bezug auf den Körper (102) um eine Schwenkachse (A257) zwischen einer angehobenen Position und einer abgesenkten Position drehbar beweglich montiert ist, wobei die Schwenkachse orthoradial zu der Längsachse (A100) ist,
- der Hebel (252) einen Führungsabschnitt (253, 255) aufweist, der mit dem Betätigungsring (170) zusammenwirkt, um den Betätigungsring (170) aus der Verriegelungsposition in die Entriegelungsposition zu führen, wenn der Hebel zwischen seiner angehobenen Position und seiner abgesenkten Position um seine Schwenkachse angetrieben wird.

## Claims

1. A female element (100; 220; 230; 240; 250) of a quick-coupling (R), configured for being coupled to a hose (10), the female element comprising:
- a body (102):
• which extends along a longitudinal axis (A100) and which defines a receiving volume (V110) for receiving the hose, the receiving volume having a shape of revolution about the longitudinal axis and jutting from the body through a mouth (126), the mouth defining a front side of the female element,
• which comprises an abutment surface (125), which is located in a plane orthogonal to the longitudinal axis and which is oriented towards the front of the female element, the abutment surface delimiting the volume for receiving the rear side of the female element, the rear side being opposite to the front side,
- one nipple (120):
• which is rigidly attached to the body (102) of the female element and which extends into the receiving volume from the abutment surface (125),
• which comprises a hollow body (124) having a shape of revolution about the longitudinal axis (A100), the hollow body defining a channel (V120) which emerges at the front side of the female element and into a passage (V100) provided in the female element on the rear side,
• which comprises an external surface,
wherein the female element further comprises:
- at least one radial opening (130), each radial opening being provided in the body (102) of the female element along a guide axis (A130) radial to the longitudinal axis (A100), each radial opening jutting into the receiving volume (V110),
- at least one lock (140), each lock being received in a respective radial opening and being movable in translation with respect to the body (102) along the corresponding guide axis (A130) between a first position, wherein the lock penetrates into the receiving volume (V110), and a second position, wherein the lock is further away from the longitudinal axis (A110) than in the first position, each lock comprising an internal surface (150) for clamping the hose, oriented towards the longitudinal axis (A100) opposite the external surface of the nipple (120),
- a return member (172) configured for returning each lock to the first position thereof, and
- an operating ring (170), which is arranged around the body (102) coaxially with the longitudinal axis (A100) and which is movable in translation with respect to the body along the longitudinal axis between a locking position and an unlocking position,
**characterized in that**:
- each lock (140) comprises pins (156), each extending along a direction orthogonal to the corresponding guide axis (A130) and orthoradial to the longitudinal axis (A100),
- the operating ring (170) comprises guide grooves (182) which cooperate with the pins of each lock (140), the guide grooves associated with each lock being geometrically supported by a guide plane (P182) inclined with respect to the longitudinal axis (A100), so that:
• each lock (140) is driven from the second position thereof to the first position thereof when the operating ring (170) is moved from the unlocking position thereof to the locking position thereof, and
• each lock is driven from the first position thereof to the second position thereof when the operating ring is moved from the locking position thereof to the unlocking position thereof.

2. The female element (100; 220; 230; 240; 250) according to claim 1, **characterized in that** the return member (172) is configured for returning the operating ring (170) towards the locking position thereof, and **in that** the operating ring drives each lock (140) towards the first position thereof when the return member returns the operating ring towards the locking position thereof.

3. The female element (100; 220; 230; 240; 250) according to any one of claims 1 or 2, **characterized in that** the guide grooves (182) move away from the longitudinal axis (A100) as same come closer to the front of the female element, the unlocking position of the operating ring (170) being an axially retracted position, along the longitudinal axis, with respect to the locking position.

4. The female element (100; 220; 230; 240; 250) according to any one of claims 1 to 3, **characterized in that** the return member applies a centripetal force to each lock (140) which tends to move each lock from the second position thereof to the first position thereof.

5. The female element (220) according to any one of claims 1 to 4, **characterized in that** the nipple (120) has a circumferential bulge (222) which is radially aligned with the internal clamping surface (150) of each lock (140) with respect to the longitudinal axis (A100).

6. The female element (100; 240; 250) according to any one of claims 1 to 4, **characterized in that**:
- the internal clamping surface (150) of each lock (140) extends geometrically on the rear side of a first clamping plane (P144) which is orthogonal to the longitudinal axis (A100),
- the nipple (120) comprises a circumferential bulge (128) provided on the external surface of the nipple (120) and situated at the front of the first clamping plane (P144) of each lock.

7. The female element (100; 240; 250) according to claim 6, **characterized in that** the circumferential bulge (128) comprises:
- a flared proximal portion (129B) which is divergent towards the front of the female element and which is arranged opposite each lock (140), and
- a distal portion (129A) diverging toward the rear of the female element.

8. The female element (100; 240; 250) according to claim 7, **characterized in that**:
- the proximal portion (129B) of the bulge is delimited rearwards by a second clamping plane (P129) which is parallel to the first clamping plane (P144),
- the first clamping plane and the second clamping plane are separated by an interval (I100) of less than 5 mm, preferentially less than 2 mm.

9. The female element (100; 240; 250) according to any one of claims 6 to 8, **characterized in that**:
- the external surface of the nipple (120) comprises a clamping portion (129C) which is located at the rear of the proximal portion (129B) of the circumferential bulge (128) and which extends opposite the internal clamping surface (150) of each lock (140),
- the clamping portion (129C) and the internal surface (150) delimit therebetween a clamping annular space (V129), and
- the clamping portion (129C) has a cylindrical shape of circular cross-section.

10. The female element (100; 220; 230; 240; 250) according to any one of claims 1 to 9, **characterized in that** the female element comprises:
- a valve (190), which is partially received in the passage (V100) and which is movable with respect to the body (102) between a forward position, wherein the valve closes the passage, and a retracted position, wherein the valve does not close the passage,
- a second return member (196), which returns the valve to the forward position,
- the valve being configured for changing from the forward position to the retracted position when a hose (10) is fitted onto the nipple (120) and abuts against the abutment surface (125).

11. The female element (100; 220; 230; 240; 250) according to claim 10, **characterized in that**:
- the body (102) has a housing (200) which emerges onto the abutment surface (125).
- the female element comprises a control member (202) which is received in the housing and which is movable in translation with respect to the body parallel to the longitudinal axis (A100), between a jutting out position, wherein a front portion (202A) of the control member is jutting out from the abutment surface, and a retracted position, wherein the front portion does not jut out from the abutment surface,
- the control member is configured for pushing the valve (190) from the forward position to the retracted position when the hose (10) is fitted onto the nipple (120) and moves the forward portion of the control member from the jutting out position thereof to the retracted position thereof.

12. The female element (100; 220; 230; 240; 250) according to claim 11, **characterized in that**:
- the body (102) comprises a first view port (138),
• which extends through the body along a viewing axis (A138) radial to the longitudinal axis (A100),
• which is provided at the front of the stop surface (125), the first port opening into the receiving volume (V110),
- the first port (138) being arranged so as to let the control member (202) in the jutting out position be observed through the first port.

13. The female element (100; 220; 230; 240; 250) according to claim 12, **characterized in that**:
- the operating ring (170) comprises a second view port (178) which extends through the operating ring along a passage axis (A178) parallel to the sighting axis (A138),
- the second port (178) is arranged to coincide with the first port (138), when the operating ring (170) is in the unlocking position, so as to make possible the observation, through the first port, of the control member (202) in the jutting out position.

14. The female element (100; 220; 230; 240; 250) according to claim 13, **characterized in that** the operating ring (170) comprises a transparent portion (171), the transparent portion covering the first port (138) and the second port (178) when the operating ring (170) is in the unlocking position.

15. The female element (250) according to any one of claims 1 to 14, **characterized in that**:
- the female element comprises a lever (252) which is mounted movable in rotation with respect to the body (102) about a pivot axis (A257) between a raised position and a lowered position, the pivot axis being orthoradial to the longitudinal axis (A100),
- the lever (252) comprises a guide portion (253, 255) which cooperates with the operating ring (170) so as to guide the operating ring (170) from the locking position to the unlocking position, when the lever is driven around the pivot axis thereof between the raised position thereof and the lowered position thereof.
